(19) 

Europäisches
Patentamt
European
Patent Office
Office européen
des brevets

(11) **EP 4 557 630 A1**

(12) **EUROPEAN PATENT APPLICATION**
published in accordance with Art. 153(4) EPC

(43) Date of publication:
    **21.05.2025 Bulletin 2025/21**

(21) Application number: **22957642.6**

(22) Date of filing: **05.09.2022**

(51) International Patent Classification (IPC):
    **H04B 7/08** $^{(2006.01)}$

(52) Cooperative Patent Classification (CPC):
    **H04B 7/08**

(86) International application number:
    **PCT/CN2022/117086**

(87) International publication number:
    **WO 2024/050667 (14.03.2024 Gazette 2024/11)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(71) Applicant: **Huawei Technologies Co., Ltd.
    Shenzhen, Guangdong 518129 (CN)**

(72) Inventors:
    • **NI, Rui
      Shenzhen, Guangdong 518129 (CN)**
    • **ZHU, Qian
      Shenzhen, Guangdong 518129 (CN)**
    • **YANG, Ganghua
      Shenzhen, Guangdong 518129 (CN)**

(74) Representative: **Pfenning, Meinig & Partner mbB
    Patent- und Rechtsanwälte
    Theresienhöhe 11a
    80339 München (DE)**

(54) **COMMUNICATION METHOD AND RELATED APPARATUS**

(57) This application provides a communication method and a related apparatus. The method is applicable to a second device including $N_{rx}$ antennas and $L_{rx}$ radio frequency channels, where $N_{rx} > L_{rx} > 0$. The method includes: The second device obtains T first antenna subsets corresponding to T time units before a $(T+1)^{th}$ time unit and T weight coefficients of the T first antenna subsets, where the T first antenna subsets corresponding to the T time units are determined based on a first channel sounding sequence, and each first antenna subset includes $L_{rx}$ antennas. The second device determines, based on the T first antenna subsets and the T weight coefficients, a first antenna subset corresponding to the $(T+1)^{th}$ time unit. The second device communicates with a first device by using the first antenna subset corresponding to the $(T+1)^{th}$ time unit. Based on the solutions in embodiments of this application, a quantity of antennas same as a quantity of radio frequency channels can be selected from an antenna array of a device and the antennas are connected to the radio frequency channels, to achieve optimal or near-optimal reception effect.

FIG. 4

## Description

### TECHNICAL FIELD

This application relates to the field of communication technologies, and in particular, to a communication method and a related apparatus.

### BACKGROUND

A 5th generation (5th generation, 5G) wireless communication system uses a massive multiple-input multiple-output (massive multiple-input multiple-output, M-MIMO) solution, that is, a large antenna array including 32, 64, or even more antennas is deployed in a base station, thereby significantly improving a system throughput and spectral efficiency compared with a 4th generation (4th generation, 4G) system. However, due to constraints in hardware costs, power consumption, and deployment space, a quantity of radio frequency (radio frequency, RF) channels of a wireless transceiver cannot be increased proportionally to a quantity of antennas. The quantity of radio frequency channels is less than the quantity of antennas, and one antenna corresponds to one radio frequency channel in a signal sending and receiving process. Therefore, how to select, from the antenna array, a quantity of antennas same as a quantity of radio frequency channels and the antennas are connected to the radio frequency channels, to achieve optimal or near-optimal reception effect is one of urgent problems to be resolved currently.

### SUMMARY

This application provides a communication method and a related apparatus, so that a quantity of antennas same as a quantity of radio frequency channels can be selected from an antenna array of a device and the antennas are connected to the radio frequency channels, to achieve optimal or near-optimal reception effect.

According to a first aspect, this application provides a communication method. The method is applied to a first device, and the method includes:

determining a first channel sounding sequence; and

sending the first channel sounding sequence to a second device in a $t^{th}$ time unit in T time units. T is a positive integer, the first channel sounding sequence is used to determine a first channel matrix H(t), the first channel matrix H(t) is a matrix with $N_{rx}$ rows and $N_{tx}$ columns, $N_{rx}$ is a quantity of antennas included in the second device, $N_{tx}$ is a quantity of antennas included in the first device, $N_{rx}$ and $N_{tx}$ are integers greater than 0, t={1, 2, ..., T}, the first channel matrix H(t) is used to determine, from the $N_{rx}$ antennas, a first antenna subset corresponding to the $t^{th}$ time unit, each first antenna subset in T first antenna subsets corresponding to the T time units and a weight coefficient of each first antenna subset are used to determine a first antenna subset corresponding to a $(T+1)^{th}$ time unit in the second device, each first antenna subset includes $L_{rx}$ antennas, the $L_{rx}$ antennas are $L_{rx}$ antennas in the $N_{rx}$ antennas, $L_{rx}$ is a positive integer, and $N_{rx} > L_{rx}$.

In this application, the first device sends the first channel sounding sequence in each of the T time units, so that the second device determines, by using the first channel sounding sequence received in each of the T time units, the first antenna subset corresponding to each of the T time units as historical a priori data. Then, the historical a priori information is used to predict/derive an antenna configuration corresponding to the $(T+1)^{th}$ time unit of the second device, to achieve optimal or near-optimal reception effect, which has strong operability.

In a possible implementation, the method further includes:
communicating with the second device in the $(T+1)^{th}$ time unit to a $(T+x)^{th}$ time unit, where x is an integer greater than 0.

In this implementation, when determining the first antenna subset corresponding to the $(T+1)^{th}$ time unit, the second device may subsequently communicate with the first device by using the determined first antenna subset corresponding to the $(T+1)^{th}$ time unit, thereby improving applicability of the solution.

In a possible implementation, the method further includes:
receiving a first message from the second device, where the first message includes T.

In this implementation, the first device receives the first message from the second device, so that the first device can determine a sending period of the first channel sounding sequence based on the first message, which helps improve applicability of the solution.

In a possible implementation, the method further includes:
receiving a second message from the second device, where the second message includes a degradation failure coefficient β.

In this implementation, the second device may further send β to the first device by using the second message, so that the first device can subsequently use β to determine a second antenna subset corresponding to the first device, thereby increasing universality of this solution.

In a possible implementation, $N_{tx}$ is an integer greater than 1.

The method further includes:

receiving first indication information from the second device. The first indication information indicates a first antenna, the $N_{tx}$ antennas include the first antenna, and the first antenna is used by the first device to perform communication with the second device.

In this implementation, when the first device is configured with a plurality of antennas, in addition to selecting a local antenna topology scheme, the second device further suggests an antenna configuration scheme for the first device (that is, indicates the first antenna used by the first device), so that a propagation environment can be better matched, which helps improve a system throughput.

In a possible implementation, the first device further includes $L_{tx}$ radio frequency channels, $N_{tx}$ and $L_{tx}$ are positive integers, $N_{tx}>L_{tx}$, and x is equal to T. The communicating with the second device in the $(T+1)^{th}$ time unit to a $(T+x)^{th}$ time unit includes:

receiving a second channel sounding sequence from the second device in the $(T+1)^{th}$ time unit to a $2T^{th}$ time unit. The second channel sounding sequence is used to determine T second antenna subsets, each second antenna subset in the T second antenna subsets and a weight coefficient of each second antenna subset are used to determine a second antenna subset corresponding to a $(2T+1)^{th}$ time unit in the first device, and the T second antenna subsets are second antenna subsets corresponding to the $(T+1)^{th}$ time unit to the $2T^{th}$ time unit.

In this implementation, when the first device is configured with a plurality of antennas, and a quantity of the plurality of antennas is greater than a quantity of radio frequency channels in the first device, the second device may further send the second channel sounding sequence to the first device, so that the first device determines an optimal second antenna subset corresponding to the $(2T+1)^{th}$ time unit in the first device, thereby increasing universality of this solution.

In a possible implementation, the method further includes:

receiving second indication information from the second device. The second indication information indicates the first device to use a second antenna subset corresponding to an $((N-1)*T+1)^{th}$ time unit to perform data communication with the second device, and N is an integer greater than 2.

In this implementation, when the first device is configured with a plurality of antennas, and a quantity of the plurality of antennas is greater than a quantity of radio frequency channels in the first device, through iterative interaction between transmit and receive ends, antenna topologies on both sides reach a converged and stable state at the same time, achieving an optimal antenna topology that best adapts to a propagation environment, which helps improve a system throughput.

In a possible implementation, the method further includes:

receiving third indication information from the second device. The third indication information indicates the first device to send the first channel sounding sequence, and the first channel sounding sequence is used to update a first antenna subset used for data communication between the second device and the first device.

In this implementation, the second device detects quality of communication with the first device, to intermittently send a channel sounding sequence based on the quality of communication. This improves adaptability of the solution of this application to a time-varying channel, and improves robustness of a system throughput.

According to a second aspect, this application provides a communication method. The method is applied to a second device including $N_{rx}$ antennas and $L_{rx}$ radio frequency channels, $N_{rx}$ and $L_{rx}$ are positive integers, and $N_{rx}>L_{rx}$. The method includes:

obtaining T first antenna subsets corresponding to T time units before a $(T+1)^{th}$ time unit and T weight coefficients of the T first antenna subsets, where the T first antenna subsets corresponding to the T time units are determined based on a first channel sounding sequence, T is a positive integer, each first antenna subset includes $L_{rx}$ antennas, the $L_{rx}$ antennas are $L_{rx}$ antennas in the $N_{rx}$ antennas, and the T first antenna subsets are used for communication with a first device in the T time units;

determining, based on the T first antenna subsets and the T weight coefficients, a first antenna subset corresponding to the $(T+1)^{th}$ time unit; and

communicating with the first device by using the first antenna subset corresponding to the $(T+1)^{th}$ time unit.

In this application, historical a priori information (that is, the T first antenna subsets corresponding to the T time units before the $(T+1)^{th}$ time unit and the T weight coefficients of the T first antenna subsets) is obtained. Then, the historical a priori information is used to predict/derive an antenna configuration (that is, the first antenna subset that corresponds to the $(T+1)^{th}$ time unit and that is determined based on the T first antenna subsets and the T weight coefficients) corresponding to the $(T+1)^{th}$ time unit. In this way, a quantity of antennas same as a quantity of radio frequency channels can be selected from an antenna array of the second device, to achieve optimal or near-optimal reception effect. In addition, such a manner of determining, through historical a priori information derivation, the first antenna subset corresponding to the (T+1)$^{th}$ time unit can reduce channel sounding and signaling overheads, and reduce calculation complexity of a calculation process of determining the first antenna subset corresponding to the (T+1)$^{th}$ time unit.

In a possible implementation, the communicating with the first device by using the first antenna subset corresponding to the (T+1)$^{th}$ time unit includes:

communicating with the first device in the (T+1)$^{th}$ time unit to a (T+x)$^{th}$ time unit by using the first antenna subset corresponding to the (T+1)$^{th}$ time unit, where x is an integer greater than 0.

In this implementation, when determining the first antenna subset corresponding to the (T+1)$^{th}$ time unit, the second device may subsequently communicate with the first device by using the determined first antenna subset corresponding to the (T+1)$^{th}$ time unit, thereby improving applicability of the solution.

In a possible implementation, the obtaining T first antenna subsets corresponding to T time units includes:

receiving, in a t$^{th}$ time unit in the T time units, the first channel sounding sequence from the first device by using s antenna subsets, where the first channel sounding sequence is used to determine a first channel matrix H(t), the first channel matrix H(t) is a matrix with $N_{rx}$ rows and $N_{tx}$ columns, $N_{tx}$ is a quantity of antennas included in the first device, $N_{tx}$ is an integer greater than 0, each antenna subset in the s antenna subsets includes $L_{rx}$ antennas, at least one antenna differs between antennas included in different antenna subsets, t={1, 2, ..., T}, and $s = \left\lceil \dfrac{N_{rx}}{L_{rx}} \right\rceil$ ; and

determining, from the $N_{rx}$ antennas based on the first channel matrix H(t), a first antenna subset corresponding to the t$^{th}$ time unit.

In this implementation, the second device receives the first channel sounding sequence from the first device in each of the T time units, to determine the first antenna subset corresponding to each of the T time units as historical a priori data, which has strong operability.

In a possible implementation, the method further includes:

sending a first message to the first device, where the first message includes T.

In this implementation, the second device sends the first message to the first device, so that the first device can determine a sending period of the first channel sounding sequence based on the first message, which helps improve applicability of the solution.

In a possible implementation, the T time units correspond to T signal-to-interference ratios, and the method further includes:

increasing a value of T when an average value of the T signal-to-interference ratios corresponding to the T time units is less than or equal to a first preset threshold; or

decreasing a value of T when an average value of the T signal-to-interference ratios corresponding to the T time units is greater than or equal to a second preset threshold. The first preset threshold is less than the second preset threshold.

In this implementation, when a channel state changes, the value of T is adjusted, which can better adapt to different communication scenarios and environment channels, and increase universality of this solution.

In a possible implementation, a weight coefficient $a$(t) of the first antenna subset corresponding to the t$^{th}$ time unit is determined based on an i$^{th}$ element w(i) in a first sequence and a signal-to-interference ratio $\gamma$(t) corresponding to the t$^{th}$ time unit, the first sequence is monotonically non-decreasing, t={1, 2, ..., T}, and i={1, 2, ..., T}.

In this implementation, the weight coefficient of the first antenna subset corresponding to the t$^{th}$ time unit is generated based on an element in the first sequence and the signal-to-interference ratio corresponding to the t$^{th}$ time unit, so that a weight coefficient adjustment process has a clear physical meaning, thereby simplifying a parameter adjustment and optimization process and improving system performance.

In a possible implementation, the method further includes:

obtaining a first queue, where the first queue sequentially includes the T signal-to-interference ratios corresponding to the T time units;

obtaining a signal-to-interference ratio corresponding to the (T+1)$^{th}$ time unit;

deleting a signal-to-interference ratio corresponding to a 1$^{st}$ time unit at the head of the first queue, and storing the signal-to-interference ratio corresponding to the (T+1)$^{th}$ time unit into the end of the first queue, to obtain an updated first queue;

updating the weight coefficient $a$(t) of the first antenna subset corresponding to the t$^{th}$ time unit, where the weight coefficient $a$(t) of the first antenna subset corresponding to the t$^{th}$ time unit is determined based on the i$^{th}$ element w(i)

in the first sequence and a signal-to-interference ratio $\gamma(t)$ corresponding to the $t^{th}$ time unit in the updated first queue, $t=\{2, ..., T\}$, and $i=\{1, 2, ..., T-1\}$; and

determining a weight coefficient $a(T+1)$ of the first antenna subset corresponding to the $(T+1)^{th}$ time unit, where the weight coefficient $a(T+1)$ of the first antenna subset corresponding to the $(T+1)^{th}$ time unit is determined based on a $T^{th}$ element of the updated first queue and a signal-to-interference ratio during the communication in the $(T+1)^{th}$ time unit.

In this implementation, a weight coefficient of the first antenna subset is dynamically adjusted, which can better adapt to different communication scenarios and environment channels, and increase universality of this solution.

In a possible implementation, w(i) satisfies:

$$w(i)=\mathrm{d},$$

where

$$\mathrm{d}\in[0, 1].$$

In this implementation, each element included in the first sequence may be a constant, which has strong operability.

In a possible implementation, the first sequence is determined based on a degradation failure coefficient $\beta$ and T, where $\beta \in [0, 1]$.

In this implementation, the first sequence may alternatively be determined based on the degradation failure coefficient $\beta$ and T. The degradation failure coefficient $\beta$ represents a speed at which a priori information in a past time degrades and fails. A value of $\beta$ closer to 0 indicates a faster degradation failure, while a value of $\beta$ closer to 1 indicates a slower degradation failure.

In a possible implementation, $w(i)$ satisfies:

$$w(i)=\mathrm{c}*(\beta)^{\mathrm{T}-i}+\mathrm{e},$$

where

$i=\{1, 2, ..., T\}$, c is a normal number, and e is a constant.

In a possible implementation, the T time units correspond to the T signal-to-interference ratios, and the method further includes:

increasing a value of $\beta$ when a variance of the signal-to-interference ratios corresponding to the T time units is less than or equal to a third preset threshold; or

decreasing a value of $\beta$ when a variance of the signal-to-interference ratios corresponding to the T time units is greater than or equal to a fourth preset threshold. The third preset threshold is less than the fourth preset threshold.

In this implementation, when a channel state changes, the value of $\beta$ is adjusted, which can better adapt to different communication scenarios and environment channels, and increase universality of this solution.

In a possible implementation, the method further includes:

sending a second message to the first device. The second message includes $\beta$, and $\beta$ is used to determine a weight coefficient of a second antenna subset corresponding to each time unit in the $(T+1)^{th}$ time unit to a $2T^{th}$ time unit for the first device.

In this implementation, the second device may further send $\beta$ to the first device by using the second message, so that the first device can subsequently use $\beta$ to determine a second antenna subset corresponding to the first device, thereby increasing universality of this solution.

In a possible implementation, the first antenna subset corresponding to the $(T+1)^{th}$ time unit includes $L_{rx}$ antennas with largest weight coefficients in a target antenna set, the target antenna set is a union of the T first antenna subsets, a weight coefficient of an antenna z in the target antenna set is a sum of weight coefficients of first antenna subsets to which the antenna z belongs, and the antenna z is any antenna in the target antenna set.

In this implementation, first antenna subsets in the historical a priori information are weighted by using corresponding weight coefficients to obtain a union, so that first $L_{rx}$ elements with largest cumulative weight sums are selected from the union as the first antenna subset corresponding to the $(T+1)^{th}$ time unit. In this way, the first antenna subset that corresponds to the $(T+1)^{th}$ time unit and that achieves optimal or near-optimal reception effect can be selected, which has strong operability.

In a possible implementation, the first device includes $N_{tx}$ antennas, and $N_{tx}$ is an integer greater than 1.

The method further includes:

sending first indication information to the first device. The first indication information indicates a first antenna, the $N_{tx}$ antennas include the first antenna, and the first antenna is used by the first device to perform communication with the second device.

In this implementation, when the first device is configured with a plurality of antennas, in addition to selecting a local antenna topology scheme, the second device further suggests an antenna configuration scheme for the first device (that is, indicates the first antenna used by the first device), so that a propagation environment can be better matched, which helps improve a system throughput.

In a possible implementation, the method further includes:

determining the first antenna from the $N_{tx}$ antennas based on the first antenna subset corresponding to the $(T+1)^{th}$ time unit and the first channel matrix H(t) corresponding to the $t^{th}$ time unit, where t is an integer, and $t \in [1, T]$.

In a possible implementation, the first device includes the $N_{tx}$ antennas and $L_{tx}$ radio frequency channels, $N_{tx}$ and $L_{tx}$ are positive integers, and $N_{tx} > L_{tx}$.

The communicating with the first device by using the first antenna subset corresponding to the $(T+1)^{th}$ time unit includes:

sending, in the $(T+1)^{th}$ time unit to the $2T^{th}$ time unit, a second channel sounding sequence to the first device by using the first antenna subset corresponding to the $(T+1)^{th}$ time unit. The second channel sounding sequence is used to determine T second antenna subsets, each second antenna subset in the T second antenna subsets and a weight coefficient of each second antenna subset are used to determine a second antenna subset corresponding to a $(2T+1)^{th}$ time unit in the first device, and the T second antenna subsets are second antenna subsets corresponding to the $(T+1)^{th}$ time unit to the $2T^{th}$ time unit.

In this implementation, when the first device is also configured with a plurality of antennas, and a quantity of the plurality of antennas is greater than a quantity of radio frequency channels in the first device, the second device may further send the second channel sounding sequence to the first device, so that the first device determines an optimal second antenna subset corresponding to the $(2T+1)^{th}$ time unit in the first device, thereby increasing universality of this solution.

In a possible implementation, the method further includes:

determining a change amount between a first antenna subset corresponding to an $(N*T+1)^{th}$ time unit and a first antenna subset corresponding to an $((N-2)*T+1)^{th}$ time unit, where N is an integer greater than 2;

sending second indication information to the first device when the change amount is less than a first preset threshold, where the second indication information indicates the first device to use a second antenna subset corresponding to an $((N-1)*T+1)^{th}$ time unit to perform data communication with the second device; and

performing data communication with the first device by using the first antenna subset corresponding to the $(N*T+1)^{th}$ time unit.

In this implementation, when the first device is configured with a plurality of antennas, and a quantity of the plurality of antennas is greater than a quantity of radio frequency channels in the first device, through iterative interaction between transmit and receive ends, antenna topologies on both sides reach a converged and stable state at the same time, achieving an optimal antenna topology that best adapts to a propagation environment, which helps improve a system throughput.

In a possible implementation, after the performing data communication with the first device by using the first antenna subset corresponding to the $(N*T+1)^{th}$ time unit, the method further includes:

sending third indication information to the first device if communication quality of the data communication does not meet preset communication quality. The third indication information indicates the second device to send the first channel sounding sequence, and the first channel sounding sequence is used to update a first antenna subset used for data communication between the second device and the first device.

In this implementation, the second device detects quality of communication with the first device, to intermittently send a channel sounding sequence based on the quality of communication. This improves adaptability of the solution of this application to a time-varying channel, and improves robustness of a system throughput.

According to a third aspect, this application provides a communication apparatus. The apparatus is a first device, and the apparatus includes:

a processing unit, configured to determine a first channel sounding sequence; and

a transceiver unit, configured to send the first channel sounding sequence to a second device in a $t^{th}$ time unit in T time units. T is a positive integer, the first channel sounding sequence is used to determine a first channel matrix H(t), the first channel matrix H(t) is a matrix with $N_{rx}$ rows and $N_{tx}$ columns, $N_{rx}$ is a quantity of antennas included in the second device, $N_{tx}$ is a quantity of antennas included in the first device, $N_{rx}$ and $N_{tx}$ are integers greater than 0, t={1, 2, ..., T}, the first channel matrix H(t) is used to determine, from the $N_{rx}$ antennas, a first antenna subset corresponding to the $t^{th}$

time unit, each first antenna subset in T first antenna subsets corresponding to the T time units and a weight coefficient of each first antenna subset are used to determine a first antenna subset corresponding to a $(T+1)^{th}$ time unit in the second device, each first antenna subset includes $L_{rx}$ antennas, the $L_{rx}$ antennas are $L_{rx}$ antennas in the $N_{rx}$ antennas, $L_{rx}$ is a positive integer, and $N_{rx}>L_{rx}$.

In a possible implementation, the transceiver unit is further configured to:
perform communication with the second device in the $(T+1)^{th}$ time unit to a $(T+x)^{th}$ time unit, where x is an integer greater than 0.

In a possible implementation, the transceiver unit is further configured to:
receive a first message from the second device, where the first message includes T.

In a possible implementation, the transceiver unit is further configured to:
receive a second message from the second device, where the second message includes a degradation failure coefficient β.

In a possible implementation, $N_{tx}$ is an integer greater than 1.

The transceiver unit is further configured to:
receive first indication information from the second device. The first indication information indicates a first antenna, the $N_{tx}$ antennas include the first antenna, and the first antenna is used by the first device to perform communication with the second device.

In a possible implementation, the first device further includes $L_{tx}$ radio frequency channels, $N_{tx}$ and $L_{tx}$ are positive integers, $N_{tx}>L_{tx}$, and x is equal to T. When communicating with the second device in the $(T+1)^{th}$ time unit to the $(T+x)^{th}$ time unit, the transceiver unit is further configured to:
receive a second channel sounding sequence from the second device in the $(T+1)^{th}$ time unit to a $2T^{th}$ time unit. The second channel sounding sequence is used to determine T second antenna subsets, each second antenna subset in the T second antenna subsets and a weight coefficient of each second antenna subset are used to determine a second antenna subset corresponding to a $(2T+1)^{th}$ time unit in the first device, and the T second antenna subsets are second antenna subsets corresponding to the $(T+1)^{th}$ time unit to the $2T^{th}$ time unit.

In a possible implementation, the transceiver unit is further configured to:
receive second indication information from the second device. The second indication information indicates the first device to use a second antenna subset corresponding to an $((N-1)*T+1)^{th}$ time unit to perform data communication with the second device, and N is an integer greater than 2.

In a possible implementation, the transceiver unit is further configured to:
receive third indication information from the second device. The third indication information indicates the first device to send the first channel sounding sequence, and the first channel sounding sequence is used to update a first antenna subset used for data communication between the second device and the first device.

According to a fourth aspect, this application provides a communication apparatus. The apparatus is a second device including $N_{rx}$ antennas and $L_{rx}$ radio frequency channels, $N_{rx}$ and $L_{rx}$ are positive integers, and $N_{rx}>L_{rx}$. The apparatus includes:

a transceiver unit, configured to obtain T first antenna subsets corresponding to T time units before a $(T+1)^{th}$ time unit and T weight coefficients of the T first antenna subsets, where the T first antenna subsets corresponding to the T time units are determined based on a first channel sounding sequence, T is a positive integer, each first antenna subset includes $L_{rx}$ antennas, the $L_{rx}$ antennas are $L_{rx}$ antennas in the $N_{rx}$ antennas, and the T first antenna subsets are used for communication with a first device in the T time units; and
a processing unit, configured to determine, based on the T first antenna subsets and the T weight coefficients, a first antenna subset corresponding to the $(T+1)^{th}$ time unit.

The transceiver unit is configured to perform communication with the first device by using the first antenna subset corresponding to the $(T+1)^{th}$ time unit.

In a possible implementation, when communicating with the first device by using the first antenna subset corresponding to the $(T+1)^{th}$ time unit, the transceiver unit is configured to:
perform communication with the first device in the $(T+1)^{th}$ time unit to a $(T+x)^{th}$ time unit by using the first antenna subset corresponding to the $(T+1)^{th}$ time unit, where x is an integer greater than 0.

In a possible implementation, when obtaining the T first antenna subsets corresponding to the T time units, the transceiver unit is configured to:

receive, in a $t^{th}$ time unit in the T time units, the first channel sounding sequence from the first device by using s antenna subsets, where the first channel sounding sequence is used to determine a first channel matrix H(t), the first channel matrix H(t) is a matrix with $N_{rx}$ rows and $N_{tx}$ columns, $N_{tx}$ is a quantity of antennas included in the first device, $N_{tx}$ is an

integer greater than 0, each antenna subset in the s antenna subsets includes $L_{rx}$ antennas, at least one antenna

$$s = \left\lceil \frac{N_{rx}}{L_{rx}} \right\rceil$$

differs between antennas included in different antenna subsets, t={1, 2, ..., T}, and ; and determine, from the $N_{rx}$ antennas based on the first channel matrix H(t), a first antenna subset corresponding to the $t^{th}$ time unit.

In a possible implementation, the transceiver unit is further configured to: send a first message to the first device, where the first message includes T.

In a possible implementation, the T time units correspond to T signal-to-interference ratios, and the processing unit is further configured to:

increase a value of T when an average value of the T signal-to-interference ratios corresponding to the T time units is less than or equal to a first preset threshold; or

decrease a value of T when an average value of the T signal-to-interference ratios corresponding to the T time units is greater than or equal to a second preset threshold. The first preset threshold is less than the second preset threshold.

In a possible implementation, a weight coefficient $a$(t) of the first antenna subset corresponding to the $t^{th}$ time unit is determined based on an $i^{th}$ element w(i) in a first sequence and a signal-to-interference ratio $\gamma$(t) corresponding to the $t^{th}$ time unit, the first sequence is monotonically non-decreasing, t={1, 2, ..., T}, and $i$={1, 2, ..., T}.

In a possible implementation, the processing unit is further configured to:

obtain a first queue, where the first queue sequentially includes the T signal-to-interference ratios corresponding to the T time units;

obtain a signal-to-interference ratio corresponding to the $(T+1)^{th}$ time unit;

delete a signal-to-interference ratio corresponding to a $1^{st}$ time unit at the head of the first queue, and store the signal-to-interference ratio corresponding to the $(T+1)^{th}$ time unit into the end of the first queue, to obtain an updated first queue;

update the weight coefficient $a$(t) of the first antenna subset corresponding to the $t^{th}$ time unit, where the weight coefficient $a$(t) of the first antenna subset corresponding to the $t^{th}$ time unit is determined based on the $i^{th}$ element w(i) in the first sequence and a signal-to-interference ratio $\gamma$(t) corresponding to the $t^{th}$ time unit in the updated first queue, t={2, ..., T}, and $i$={1, 2, ..., T-1}; and

determine a weight coefficient $a$(T+1) of the first antenna subset corresponding to the $(T+1)^{th}$ time unit, where the weight coefficient $a$(T+1) of the first antenna subset corresponding to the $(T+1)^{th}$ time unit is determined based on a $T^{th}$ element of the updated first queue and a signal-to-interference ratio during the communication in the $(T+1)^{th}$ time unit.

In a possible implementation, $w$($i$) satisfies:

$$w(i) = d,$$

where

$$d \in [0, 1].$$

In a possible implementation, the first sequence is determined based on a degradation failure coefficient $\beta$ and T, where $\beta \in [0, 1]$.

In a possible implementation, w(i) satisfies:

$$w(i) = c * (\beta)^{T-i} + e,$$

where
$i$={1, 2, ..., T}, c is a normal number, and e is a constant.

In a possible implementation, the T time units correspond to the T signal-to-interference ratios, and the processing unit is further configured to:

increase a value of β when a variance of the signal-to-interference ratios corresponding to the T time units is less than or equal to a third preset threshold; or

decrease a value of β when a variance of the signal-to-interference ratios corresponding to the T time units is greater than or equal to a fourth preset threshold. The third preset threshold is less than the fourth preset threshold.

In a possible implementation, the transceiver unit is further configured to:

send a second message to the first device. The second message includes β, and β is used to determine a weight coefficient of a second antenna subset corresponding to each time unit in the $(T+1)^{th}$ time unit to a $2T^{th}$ time unit for the first device.

In a possible implementation, the first antenna subset corresponding to the $(T+1)^{th}$ time unit includes $L_{rx}$ antennas with largest weight coefficients in a target antenna set, the target antenna set is a union of the T first antenna subsets, a weight coefficient of an antenna z in the target antenna set is a sum of weight coefficients of first antenna subsets to which the antenna z belongs, and the antenna z is any antenna in the target antenna set.

In a possible implementation, the first device includes $N_{tx}$ antennas, and $N_{tx}$ is an integer greater than 1.

The transceiver unit is further configured to:

send first indication information to the first device. The first indication information indicates a first antenna, the $N_{tx}$ antennas include the first antenna, and the first antenna is used by the first device to perform communication with the second device.

In a possible implementation, the transceiver unit is further configured to:

determine the first antenna from the $N_{tx}$ antennas based on the first antenna subset corresponding to the $(T+1)^{th}$ time unit and the first channel matrix H(t) corresponding to the $t^{th}$ time unit, where t is an integer, and t ∈ [1, T].

In a possible implementation, the first device includes the $N_{tx}$ antennas and $L_{tx}$ radio frequency channels, $N_{tx}$ and $L_{tx}$ are positive integers, and $N_{tx} > L_{tx}$.

When communicating with the first device by using the first antenna subset corresponding to the $(T+1)^{th}$ time unit, the transceiver unit is configured to:

send, in the $(T+1)^{th}$ time unit to the $2T^{th}$ time unit, a second channel sounding sequence to the first device by using the first antenna subset corresponding to the $(T+1)^{th}$ time unit. The second channel sounding sequence is used to determine T second antenna subsets, each second antenna subset in the T second antenna subsets and a weight coefficient of each second antenna subset are used to determine a second antenna subset corresponding to a $(2T+1)^{th}$ time unit in the first device, and the T second antenna subsets are second antenna subsets corresponding to the $(T+1)^{th}$ time unit to the $2T^{th}$ time unit.

In a possible implementation, the processing unit is further configured to determine a change amount between a first antenna subset corresponding to an $(N*T+1)^{th}$ time unit and a first antenna subset corresponding to an $((N-2)*T+1)^{th}$ time unit, where N is an integer greater than 2.

The transceiver unit is further configured to send second indication information to the first device when the change amount is less than a first preset threshold. The second indication information indicates the first device to use a second antenna subset corresponding to an $((N-1)*T+1)^{th}$ time unit to perform data communication with the second device.

The transceiver unit is further configured to perform data communication with the first device by using the first antenna subset corresponding to the $(N*T+1)^{th}$ time unit.

In a possible implementation, after performing data communication with the first device by using the first antenna subset corresponding to the $(N*T+1)^{th}$ time unit, the processing unit is further configured to:

send third indication information to the first device by using the transceiver unit if communication quality of the data communication does not meet preset communication quality. The third indication information indicates the second device to send the first channel sounding sequence, and the first channel sounding sequence is used to update a first antenna subset used for data communication between the second device and the first device.

According to a fifth aspect, this application provides a communication apparatus. The apparatus may be a first device (for example, the first device may be a terminal device), or may be an apparatus in a first device, or may be an apparatus that can be used in combination with a first device. The communication apparatus may alternatively be a chip system. The communication apparatus may perform the method according to the first aspect. Functions of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effects thereof, refer to the method and beneficial effects according to the first aspect. Repeated parts are not described again.

According to a sixth aspect, this application provides a communication apparatus. The apparatus may be a second device (for example, the second device may be an access network device), or may be an apparatus in a second device, or may be an apparatus that can be used in combination with a second device. The communication apparatus may alternatively be a chip system. The communication apparatus may perform the method according to the second aspect. Functions of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effects thereof, refer to the method and beneficial effects according to the first aspect. Repeated parts are not described again.

According to a seventh aspect, this application provides a communication apparatus. The apparatus may be a first device. The communication apparatus includes a processor and a transceiver. The processor and the transceiver are configured to execute a computer program or instructions stored in at least one memory, so that the apparatus implements the method according to any implementation of the first aspect.

According to an eighth aspect, this application provides a communication apparatus. The apparatus may be a first device. The communication apparatus includes a processor, a transceiver, and a memory. The processor, the transceiver, and the memory are coupled. The processor and the transceiver are configured to implement the method according to any implementation of the first aspect and/or the second aspect. Optionally, the memory and the processor may be integrated together.

According to a ninth aspect, this application provides a communication apparatus. The apparatus may be a second device. The communication apparatus includes a processor and a transceiver. The processor and the transceiver are configured to execute a computer program or instructions stored in at least one memory, so that the apparatus implements the method according to any implementation of the second aspect.

According to a tenth aspect, this application provides a communication apparatus. The apparatus may be a second device. The communication apparatus includes a processor, a transceiver, and a memory. The processor, the transceiver, and the memory are coupled. The processor and the transceiver are configured to implement the method according to any implementation of the second aspect and/or the second aspect. Optionally, the memory and the processor may be integrated together.

According to an eleventh aspect, this application provides a computer-readable storage medium. The storage medium stores a computer program or instructions, and when the computer program or the instructions are executed by a computer, the method according to any implementation of the first aspect or the second aspect is implemented.

According to a twelfth aspect, this application provides a computer program product including instructions. The computer program product includes computer program code, and when the computer program code is run on a computer, the method according to any implementation of the first aspect or the second aspect is implemented.

According to a thirteenth aspect, a communication system is provided. The communication system includes: the first device according to the third aspect, the fifth aspect, the seventh aspect, or the eighth aspect; and the second device according to the fourth aspect, the sixth aspect, the ninth aspect, or the tenth aspect.

## BRIEF DESCRIPTION OF DRAWINGS

FIG. 1 is a diagram of a structure of a communication system according to an embodiment of this application;
FIG. 2 is a diagram of basic functional modules of a transmit end and a receive end according to an embodiment of this application;
FIG. 3 is a diagram of an arrangement of an antenna array according to an embodiment of this application;
FIG. 4 is a schematic flowchart of a communication method according to an embodiment of this application;
FIG. 5 is a diagram of a first queue according to an embodiment of this application;
FIG. 6 is a diagram of an updated first queue according to an embodiment of this application;
FIG. 7 is another schematic flowchart of a communication method according to an embodiment of this application;
FIG. 8 is another schematic flowchart of a communication method according to an embodiment of this application;
FIG. 9 is another schematic flowchart of a communication method according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of another communication apparatus according to an embodiment of this application; and
FIG. 13 is a diagram of a structure of another communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. The term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. The terms such as "first" and "second" do not limit a quantity and an execution sequence, and the terms such as "first" and "second" do not indicate a definite difference.

In this application, the terms such as "example" or "for example" are used to represent giving an example, an illustration, or a description. Any embodiment or design scheme described as an "example" or "for example" in this application should not be construed as being more preferred or more advantageous over another embodiment or design scheme. To be precise, the terms such as "example" or "for example" are intended to present a related concept in a specific manner.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as a new radio (new radio, NR) system, an evolved system after 5G such as a 6th generation (6th generation, 6G) system, and a wireless local area network (wireless local area network, WLAN). This is not limited herein. Optionally, the technical solutions in embodiments of this application may also be applied to an optical communication system equipped with a plurality of laser sources and a plurality of laser detectors, provided that a quantity of the laser detectors is far greater than a quantity of channels of a back-end analog-to-digital converter.

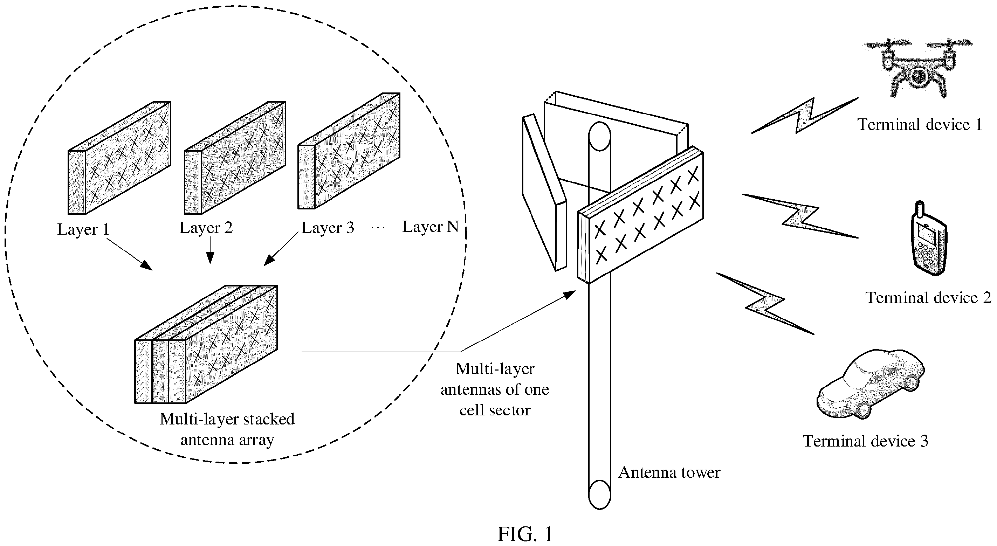

For example, FIG. 1 is a diagram of a structure of a communication system according to an embodiment of this application. The communication system includes at least one access network device (only one access network device is shown in FIG. 1) and a plurality of terminal devices (for example, a terminal device 1 to a terminal device 3 shown in FIG. 1). In the communication system, the terminal device 1 to the terminal device 3 may send uplink information to the access network device, and the access network device may also send downlink information to the terminal device 1 to the terminal device 3.

The access network device includes an antenna tower and multi-layer antennas of a plurality of cell sectors. The multi-layer antennas of each cell sector are formed by a plurality of layers of antenna arrays stacked in a geometric spatial arrangement.

As shown in FIG. 1, each access network device includes three sectors, an antenna array of each sector includes three stacked layers, and a plurality of antenna elements are evenly distributed on a rectangular plane at each layer of antennas. It can be easily learned that this application may include a plurality of sectors, a plurality of layers of antennas are stacked, and any quantity of antenna elements may be distributed in any shape, evenly, or unevenly at each layer of antennas. A shape, distribution, and a quantity of elements of antennas at different layers may be the same or may be different.

An application scenario of this application is preferably a wireless communication scenario of a macro cell of an access network device, and may alternatively be extended to an indoor micro cell scenario, and other scenarios such as direct interconnection between vehicles and direct interconnection between uncrewed aerial vehicles. To better reflect a performance advantage of solutions of this application, ideally, a greater variety of propagation paths of a spatial channel, a greater variety of directions of departing or arriving at an antenna, and more even distribution of signal energy in different directions indicate better performance.

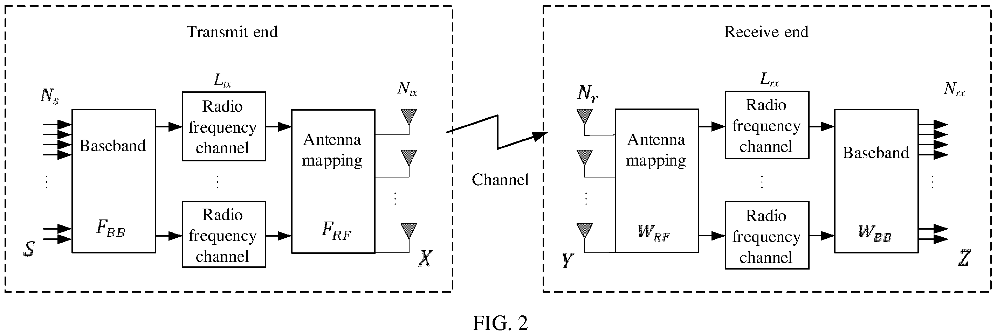

Basic functional modules of a transmit end and a receive end in this application are shown in FIG. 2. The transmit end includes four basic functional modules: a baseband, a radio frequency channel, an antenna mapping, and an antenna, and the receive end also correspondingly includes four basic functional modules: a baseband, a radio frequency channel, an antenna mapping, and an antenna. Parameter configurations of the transmit end and the receive end may be the same or different. Quantities of radio frequency channels are respectively $L_{tx}$ and $L_{rx}$, and quantities of antennas are respectively $N_{tx}$ and $N_{rx}$. Baseband encoding and decoding matrices are respectively $F_{BB}$ and $W_{BB}$. Antenna mappings are respectively $F_{RF}$ and $W_{RF}$. Antenna topologies of the transmit end and the receive end may be the same or different. This is not limited herein.

The terminal device in embodiments of this application may be a device having a wireless transceiver function, and may be specifically a user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session start protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a communication device carried on a high-altitude aircraft, a wearable device, an uncrewed aerial vehicle, a robot, a point-of-sale (point of sale, POS) machine, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In this embodiment of this application, an apparatus configured to implement a function of the terminal device may be a terminal device, or may be an apparatus that can support the terminal device in implementing the function, for example, a chip system. The apparatus may be mounted in a terminal device or used in combination with a terminal device. In this embodiment of this application, the chip system may include a chip, or may include a chip and another discrete component.

The access network device in embodiments of this application may be a device having a wireless transceiver function, and is configured to perform communication with the terminal device, or may be a device that connects the terminal device to a wireless network. The access network device may be a node in a radio access network. The access network device may be referred to as a base station or a radio access network (radio access network, RAN) node (or device). The access network device may be an evolved NodeB (evolved NodeB, eNB or eNodeB) in LTE, a next-generation NodeB (next-generation NodeB, gNB) in a 5G network or a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the access network device in embodiments of this application may include various forms of base stations, for example, a macro base station, a micro base station (also referred to as a small cell), a relay station, an access point, a device that implements a base station function in an evolved communication system after 5G, an access point (access point, AP) in a Wi-Fi system, a transmitting and receiving point (transmitting and receiving point, TRP), a transmitting point (transmitting point, TP), a mobile switching center, a device that assumes a base station function in device-to-device (Device-to-Device, D2D), vehicle-to-everything (vehicle-to-everything, V2X), and machine-to-machine (machine-to-machine, M2M) communication, and the like. The access network device may further include a central unit (central unit, CU) and a distributed unit (distributed unit, DU) in a cloud radio access network (cloud radio access network, C-RAN) system, and an access network device in a non-terrestrial network (non-terrestrial network, NTN) communication system, that is, may be deployed on a high altitude platform station or a satellite. This is not limited in embodiments of this application.

The access network device may communicate and interact with a core network device, to provide a communication service for the terminal device. The core network device is, for example, a device in a 5G core network (core network, CN). As a bearer network, the core network provides an interface to a data network, provides communication connection, authentication, management, and policy control for a terminal, bears a data service, and the like.

In embodiments of this application, an apparatus configured to implement a function of the access network device may be an access network device, or may be an apparatus that can support the access network device in implementing the function, for example, a chip system. The apparatus may be mounted in an access network device or used in combination with an access network device.

It should be noted that a first device in embodiments of this application may be a terminal device (for example, a UE), and a second device may be an access network device. Alternatively, the first device may be an access network device, and the second device may be a terminal device. This is not limited herein. For ease of understanding, the following embodiments of this application are mainly described by using an example in which the first device is the terminal device and the second device is the access network device.

It may be understood that one or more antennas may be installed on both the first device and the second device, and a plurality of antennas may form an antenna array. For ease of understanding, an antenna of the first device (that is, the access network device) is used as an example for description subsequently. It should be noted that an antenna array in embodiments of this application may include discrete multi-antennas, for example, stereoscopic compact antennas, or may include analog continuous aperture antennas including a Luneburg lens. This is not limited herein.

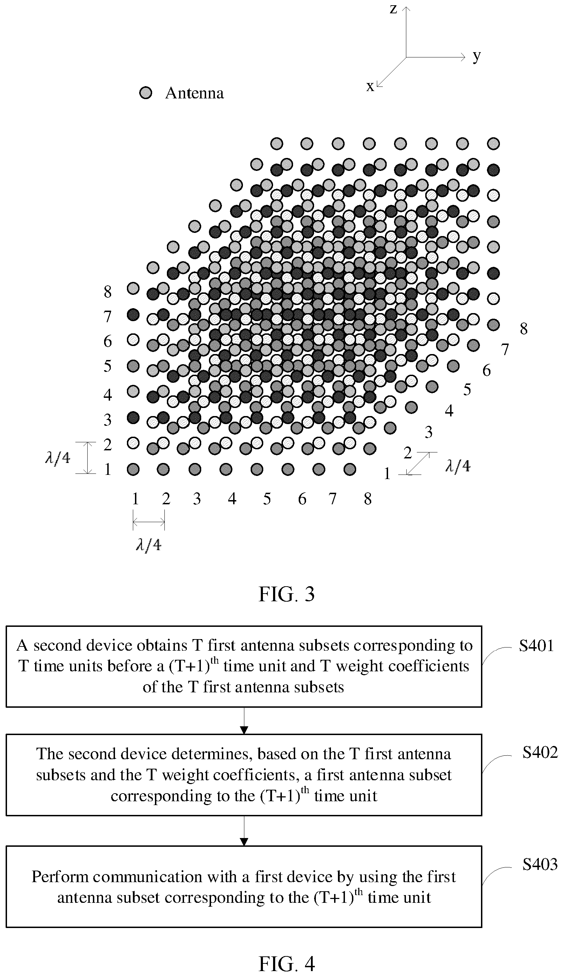

For example, FIG. 3 is a diagram of an arrangement of an antenna array according to an embodiment of this application. As shown in FIG. 3, the antenna array is a point source abstract graph of stereoscopic compact antennas in a three dimension (three dimension, 3D)- $\lambda/4$ distribution manner. The antenna array includes 8*8*8 antennas in total, where a distance between two adjacent antennas is $\lambda/4$.

It should be noted that a 5G communication system uses an M-MIMO solution, and a large antenna array including 32, 64, or even more antennas is deployed in a base station, thereby significantly improving a throughput and spectral efficiency of an entire system compared with a 4G system. However, due to constraints in hardware costs, power consumption, and deployment space, a quantity of radio frequency channels of a wireless transceiver cannot be increased proportionally to a quantity of antennas. The quantity of radio frequency channels is less than the quantity of antennas, and one antenna corresponds to one radio frequency channel in a signal sending and receiving process. Therefore, it is necessary to select, from the antenna array, antennas that have a same quantity as the radio frequency channels and connect the antennas to the radio frequency channels. In a related technology, it is proposed that any quantity of antennas may be randomly selected to form an antenna topology, or an antenna topology may be selected from a group of fixed antenna topologies that are designed in advance. However, these methods cannot fully utilize flexibility and freedom provided by massive antennas, and cannot approach or reach an upper limit of a theoretical capacity.

Based on this, this application provides a communication method, so that a quantity of antennas same as a quantity of radio frequency channels can be selected from an antenna array of a device and the antennas are connected to the radio frequency channels, to achieve optimal or near-optimal reception effect.

It should be noted that in embodiments of this application, an antenna array formed by antennas included in the second device is a multi-layer compact antenna array, and the second device has learned of topology structure information of the multi-layer compact antenna array.

Specifically, the second device uses any point in a local coordinate system as the origin of coordinates $(0, 0, 0)$, and records each antenna in the multi-layer compact antenna array as a 5-tuple $(id, x, y, z, p)$, where id is a unique number of the antenna, x, y, and z are respectively coordinate values of the antenna on an X-axis, a Y-axis, and a Z-axis in three-dimensional space, and p is a polarization direction of the antenna. Specifically, the polarization direction p may be represented by a horizontal angle $\theta$ and a pitch angle $\phi$. Multi-layer compact antennas of the second device include $N_{rx}$ antennas. For topology structure information of the antenna array in the local coordinate system, refer to the following Table 1, or another equivalent information storage form including $N_{rx}$ 5-tuples.

Table 1

| ID | X coordinate | Y coordinate | Z coordinate | Polarization direction |
|---|---|---|---|---|
| 1 | $x_1$ | $y_1$ | $z_1$ | $p_1$ |
| 2 | $x_2$ | $y_2$ | $z_2$ | $p_2$ |
| ... | ... | ... | ... | ... |
| $N_{rx}$ | $x_{Nrx}$ | $y_{Nrx}$ | $z_{Nrx}$ | $p_{Nrx}$ |

For example, the multi-layer compact antenna array may be specifically a regular cubic lattice with eight rows, eight columns, and eight layers arranged at a quarter-wavelength spacing, as shown in FIG. 3. It is assumed that a center frequency of an antenna operating frequency is $f_0$ Hz, and a speed of light in vacuum is $c_0$ m/s. In this case, a wavelength is equal to $\lambda = c_0/f_0$ m. It is assumed that a polarization direction of an antenna uniformly points to a +Z axis direction. Corresponding to Table 1, $N_{rx}$=512, p=+Z, a 1st row of the topology structure information is (1, 0, 0, 0, +Z), a 2nd row is (2, $\lambda/4$, 0, 0, +Z), ..., and a 512th row is (512, $7\lambda/4$, $7\lambda/4$, $7\lambda/4$, +Z).

It should be noted that in embodiments of this application, the transmit end is the first device, and the receive end is the second device. There may be one or more first devices. A quantity $N_{tx}$ of antennas included in the first device may be one or more, and a quantity $L_{tx}$ of radio frequency channels included in the first device may be one or more. For example, the first device may include the following four cases: ① At the transmit end, there is one terminal device equipped with $N_{tx}$=1 antenna and $L_{tx}$=1 radio frequency channel (the transmit end is referred to as a single UE plus a single antenna for short). ② At the transmit end, there is one terminal device equipped with $N_{tx}$=2 antennas and $L_{tx}$=2 radio frequency channels (the transmit end is referred to as a single UE plus a plurality of antennas for short). ③ At the transmit end, there are two terminal devices equipped with $N_{tx}$=1 antenna and $L_{tx}$=1 radio frequency channel (the transmit end is referred to as a plurality of UEs plus a single antenna for short). ④ At the transmit end, there are two terminal devices equipped with $N_{tx}$=2 antennas and $L_{tx}$=2 radio frequency channels (the transmit end is referred to as a plurality of UE plus a plurality of antennas for short). ⑤ At the transmit end, there is one terminal device equipped with multi-layer compact antennas of $N_{tx}$ antennas and $L_{tx}$ radio frequency channels, and $N_{tx}$>$L_{tx}$. For example, $N_{tx}$=512, and $L_{tx}$=16. It may be understood that in embodiments of this application, there is one second device. A quantity $N_{rx}$ of antennas included in the second device is more than one, a quantity $L_{rx}$ of radio frequency channels is more than one, and the quantity $N_{rx}$ of antennas > the quantity $L_{rx}$ of radio frequency channels. For example, the receive end is one base station equipped with multi-layer compact antennas of $N_{rx}$=512 antennas and $L_{rx}$=16 radio frequency channels.

It should be further noted that both $N_{tx}$ and $N_{rx}$ herein are quantities of antennas that can be applied to embodiments of this application. Actual quantities of antennas at the transmit end and the receive end may be equal to $N_{tx}$ or $N_{rx}$, or may be greater than $N_{tx}$ or $N_{rx}$. This is not limited herein.

It should be further noted that symbols "$\times$" and "*" in embodiments of this application both indicate multiplication.

The following describes in detail the communication method and the communication apparatus provided in this application.

FIG. 4 is a schematic flowchart of a communication method according to an embodiment of this application. As shown in FIG. 4, the communication method includes the following steps S401 to S403. An execution body of the method shown in FIG. 4 may be a first device or a second device. Alternatively, an execution body of the method shown in FIG. 4 may be a chip in a first device or a second device. The following embodiments of this application are described by using the first device and the second device as an example. The first device may be specifically understood as a UE, and the second device may be specifically understood as an access network device. It should be noted that a procedure shown in FIG. 4 is mainly for a scenario in which the first device is one terminal device equipped with $N_{tx}$=1 antenna and $L_{tx}$=1 radio frequency channel, the second device is one access network device equipped with $N_{rx}$ antennas and $L_{rx}$ radio frequency channels, and the quantity $N_{rx}$ of antennas of the second device > the quantity $L_{rx}$ of radio frequency channels. It should be noted that, because the first device is a single-antenna device (that is, there is only one antenna), the first device can interact with the second device only by using the antenna.

S401: The second device obtains T first antenna subsets corresponding to T time units before a $(T+1)^{th}$ time unit and T weight coefficients of the T first antenna subsets.

In some feasible implementations, the second device obtains the T first antenna subsets corresponding to the T time units before the $(T+1)^{th}$ time unit and the T weight coefficients of the T first antenna subsets. T is a positive integer, and each first antenna subset includes $L_{rx}$ antennas, where the $L_{rx}$ antennas are $L_{rx}$ antennas in the $N_{rx}$ antennas. The T first antenna subsets are used for communication with the first device in the T time units.

It should be noted that the T first antenna subsets corresponding to the T time units may be determined based on a first channel sounding sequence. Specifically, the first device may send the first channel sounding sequence to the second device in a $t^{th}$ time unit in the T time units. Correspondingly, the second device receives the first channel sounding sequence from the first device in the $t^{th}$ time unit in the T time units by using s antenna subsets. The first channel sounding sequence is used to determine a first channel matrix H(t). Therefore, the first device may determine, from the $N_{rx}$ antennas based on the first channel matrix H(t), a first antenna subset corresponding to the $t^{th}$ time unit. The first channel matrix H(t) is a matrix with $N_{rx}$ rows and $N_{tx}$ columns, $N_{tx}$ is a quantity of antennas included in the first device, $N_{tx}$ is an integer greater than 0, each antenna subset in the s antenna subsets includes $L_{rx}$ antennas, at least one antenna differs between

$$s=\left\lceil \frac{N_{rx}}{L_{rx}} \right\rceil$$

antennas included in different antenna subsets, t={1, 2, ..., T}, and . A symbol [r] represents rounding r up. In other words, for each of the T time units, the first device may send, to the second device by using one antenna in each time unit, the first channel sounding sequence that carries identity information of the first device. Correspondingly, the second device selects an antenna subset in each time unit in batches to monitor the first channel sounding sequence, and obtains, based on the detected first channel sounding sequence corresponding to each time unit, a first channel matrix corresponding to each time unit. In this way, a first antenna subset corresponding to each time unit is selected based on the first channel matrix corresponding to each time unit. For ease of description, subsequent embodiments of this application mainly use an arbitrary time unit, for example, the $t^{th}$ time unit, as an example for description, where t={1, 2, ..., T}, and the first channel matrix obtained based on the first channel sounding sequence detected in the $t^{th}$ time unit may be represented as H(t).

It may be understood that a representation form of carrying the identity information of the first device includes but is not limited to: the second device allocates a globally unique mutually orthogonal codeword sequence to each first device in advance, or the second device allocates mutually orthogonal time and/or frequency resource blocks to each first device in advance, to send the first channel sounding sequence. Therefore, the second device may determine, based on the received first channel sounding sequence, a specific first device that the received first channel sounding sequence is from, or the second device may determine, based on a resource on which the first channel sounding sequence is received, a specific first device that the received first channel sounding sequence is from. In other words, a first device that sends a first channel sounding sequence may be marked by using the first channel sounding sequence, where one first channel sounding sequence corresponds to one first device. Alternatively, a first device that sends a first channel sounding sequence may be marked by using a resource (for example, a time domain resource and/or a frequency domain resource) used for sending the first channel sounding sequence, that is, one resource corresponds to one first device. This is not limited herein.

It may be understood that, when an antenna subset is selected in the $t^{th}$ time unit in batches to monitor the first channel sounding sequence, $L_{rx}$ antennas selected in each batch are respectively connected to the $L_{rx}$ radio frequency channels, and antennas with an inter-antenna spacing not less than a preset distance (for example, a half wavelength $\lambda/2$) are selected in a same batch as far as possible. Antennas selected in different batches should not overlap as far as possible, so that all antennas included in the first device are selected as much as possible in the $t^{th}$ time unit.

An element corresponding to an $f^{th}$ row and an $f^{th}$ column in the first channel matrix H(t) represents a channel response between an $f^{th}$ antenna in the $N_{rx}$ antennas included in the second device and an $f^{th}$ antenna in the $N_{tx}$ antennas

included in the first device. Herein, because the first device includes one antenna, the first channel matrix H(t) is a column vector of $N_{rx}$ rows and one column, and each vector element is represented as a complex number $h_n$, and $1 \le n \le N_{rx}$. For example, it is assumed that $N_{rx}$=50, and $L_{rx}$=10. Herein, $L_{rx}$=10 means that the second device includes 10 radio frequency channels, and $N_{rx}$=50 means that the second device includes 50 antennas. Therefore, in the $t^{th}$ time unit, the first channel sounding sequence from the first device may be separately monitored in five batches (that is, $s=N_{rx}/L_{rx}$=5), 10 antennas selected in each batch are respectively connected to the 10 radio frequency channels, antennas with an inter-antenna spacing not less than the preset distance are selected in a same batch as far as possible, and antennas selected in different batches do not overlap as far as possible. Therefore, a first channel matrix H(t) with 50 rows and one column may be obtained.

It may be understood that, for details about how to obtain the first channel matrix H(t) by monitoring the first channel sounding sequence, refer to descriptions in "physical channels and modulation" in 3GPP TS 36.211. Details are not described herein. Optionally, the second device may further obtain a signal-to-interference ratio for each time unit by monitoring the first channel sounding sequence. For example, a signal-to-interference ratio corresponding to the $t^{th}$ time unit may be represented as $\gamma(t)$. It should be noted that the signal-to-interference ratio in embodiments of this application may be a ratio of a signal to a sum of interference and noise, or may be a ratio of a signal to interference, or may be a ratio of a signal to noise. This is specifically determined based on an actual application scenario, and is not limited herein.

It may be understood that, that the second device determines, from the $N_{rx}$ antennas based on the first channel matrix H(t), the first antenna subset corresponding to the $t^{th}$ time unit is specifically implemented in the following manner.

In a first step, the second device calculates a received power $p_n = h_n^* h_n$ of each antenna one by one, where $1 \le n \le N_r$, to form a first set $\boldsymbol{P} = \{p_1, ..., p_n, ... p_{Nr,x}\}$ and a second set $\boldsymbol{S} = \{\varnothing\}$.

In a second step, perform an iteration loop $L_{rx}$ times, select an antenna with a largest power from the first set $\boldsymbol{P}$ each time, add the selected antenna (denoted as m) to the second set $\boldsymbol{S}$, and remove the selected antenna from the first set $\boldsymbol{P}$. Then, determine whether a quantity of elements included in the second set $\boldsymbol{S}$ reaches $L_{rx}$. If the quantity of elements included in the second set $\boldsymbol{S}$ reaches $L_{rx}$, skip the iteration loop in the second step, and perform a third step; or if the quantity of elements included in the second set $\boldsymbol{S}$ does not reach $L_{rx}$, refresh remaining elements $p_n = p_n - \dfrac{|h_m^* h_n|^2}{p_m + 1/\rho}$ of the current first set $\boldsymbol{P}$, and then continue the iteration loop in the second step.

In the third step, determine the second set $\boldsymbol{S}$ including $L_{rx}$ elements as the first antenna subset $\boldsymbol{S}(t)$ corresponding to the $t^{th}$ time unit.

It should be noted that a weight coefficient $a(t)$ of the first antenna subset corresponding to the $t^{th}$ time unit is determined based on an $i^{th}$ element $w(i)$ in a first sequence and the signal-to-interference ratio $\gamma(t)$ corresponding to the $t^{th}$ time unit, the first sequence is monotonically non-decreasing, t={1, 2, ..., T}, and i={1, 2, ..., T}. Monotonically non-decreasing herein includes being unchanged, monotonically increasing, or the like.

For example, in an implementation, $w(i)$ satisfies: $w(i)$=d, where d $\in$ [0, 1]. In other words, each element in the first sequence is set to a same value d, where d is a decimal satisfying $0 \le d \le 1$.

For another example, in another implementation, the first sequence is determined based on a degradation failure coefficient $\beta$ and T, where $\beta \in$ [0, 1]. In an example, $w(i)$ satisfies: $w(i)$=c*$(\beta)^{T-i}$+e, where i={1, 2, ..., T}, c is a normal number, and e is a constant. It should be noted that a value of $\beta$ may vary depending on a specific situation, and a corresponding physical meaning of $\beta$ is a speed at which a priori information degrades and fails in past time. Specifically, $\beta$ is a decimal satisfying $0 \le \beta \le 1$, where a value closer to 0 indicates a faster degradation failure, while a value closer to 1 indicates a slower degradation failure.

For example, it is assumed that T=4, $\beta$=0.9, c=1, and e=0 are used as an example. Therefore, the first sequence= {0.729, 0.81, 0.9, 1}.

Specifically, the weight coefficient $a(t)$ of the first antenna subset corresponding to the $t^{th}$ time unit is determined based on the $i^{th}$ element $w(i)$ in the first sequence and a signal-to-interference ratio $\gamma(t)$ corresponding to the $t^{th}$ time unit. Specifically, it may be understood as that the weight coefficient $a(t)$ of the first antenna subset corresponding to the $t^{th}$ time unit is a product of the $i^{th}$ element $w(i)$ in the first sequence and the signal-to-interference ratio $\gamma(t)$ corresponding to the $t^{th}$ time unit.

For example, it is assumed that a first sequence={0.729, 0.81, 0.9, 1}, and T=4, where a signal-to-interference ratio corresponding to a $1^{st}$ time unit in the four time units is $\gamma(1)$=1, a signal-to-interference ratio corresponding to a $2^{nd}$ time unit is $\gamma(2)$=1.5, a signal-to-interference ratio corresponding to a $3^{rd}$ time unit is $\gamma(3)$=1.2, and a signal-to-interference ratio corresponding to a $4^{th}$ time unit is $\gamma(4)$=1.1. In this case, a weight coefficient $a(1)$ of a first antenna subset corresponding to the $1^{st}$ time unit is $1\times0.729$=0.729, a weight coefficient a(2) of a first antenna subset corresponding to the $2^{nd}$ time unit is $1.5\times0.81$=1.215, a weight coefficient a(3) of a first antenna subset corresponding to the $3^{rd}$ time unit is $1.2\times0.9$=1.08, and a weight coefficient a(4) of a first antenna subset corresponding to the $4^{th}$ time unit is $1.1\times1$=1.1.

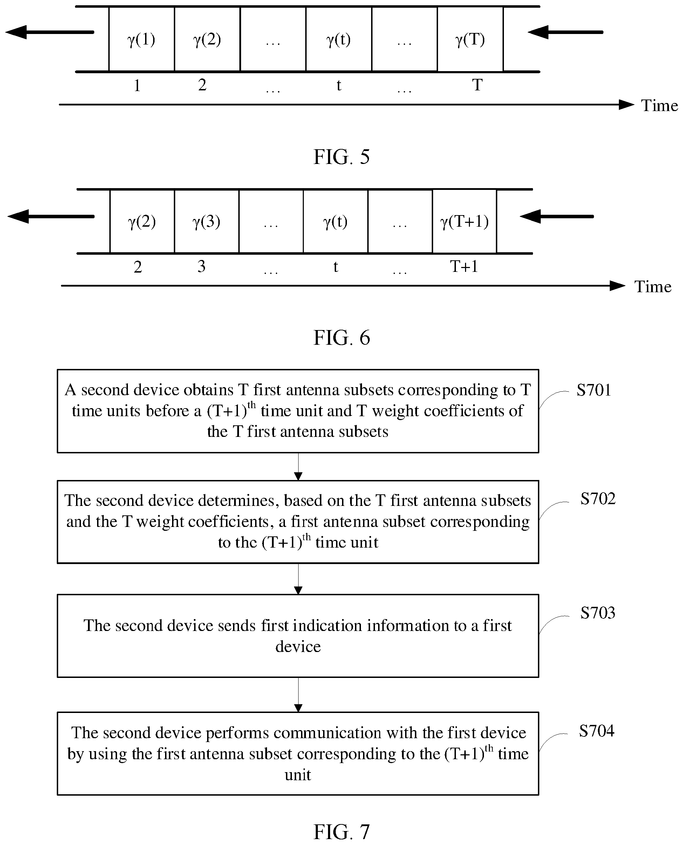

It should be noted that T signal-to-interference ratios corresponding to the T time units may be sequentially stored in the first queue with a length of T in a first in first out (first in first out, FIFO) manner. As shown in FIG. 5, a signal-to-interference ratio $\gamma(1)$ corresponding to a 1st time unit is stored at a front of the first queue, a signal-to-interference ratio $\gamma(1)$ corresponding to a 2nd time unit is stored at a 2nd position of the first queue, ..., and a signal-to-interference ratio $\gamma(T)$ corresponding to a Tth time unit is stored at a rear of the first queue. In other words, the first queue sequentially includes T signal-to-interference ratios corresponding to the 1st time unit to the Tth time unit in the T time units.

S402: The second device determines, based on the T first antenna subsets and the T weight coefficients, a first antenna subset corresponding to the (T+1)th time unit.

In some feasible implementations, the second device determines, based on the T first antenna subsets and the T weight coefficients, the first antenna subset corresponding to the (T+1)th time unit. Specifically, the first antenna subset corresponding to the (T+1)th time unit includes $L_{rx}$ antennas with largest weight coefficients in a target antenna set, the target antenna set is a union of the T first antenna subsets, a weight coefficient of an antenna z in the target antenna set is a sum of weight coefficients of first antenna subsets to which the antenna z belongs, and the antenna z is any antenna in the target antenna set. That is, that the second device determines, based on the T first antenna subsets and the T weight coefficients, the first antenna subset corresponding to the (T+1)th time unit may be implemented by using the following steps.

In a first step, the second device first weights the T first antenna subsets and the T weight coefficients and then obtain a union, to obtain a weighted sum union $R = a(1)S(1) \cup a(2)S(2) ... \cup a(T)S(T),$ where a symbol $\cup$ represents that an element union is obtained and element weights are summed.

In a second step, the second device selects, from the union $R,$ first $L_{rx}$ elements with largest cumulative weight sums as the first antenna subset $S(T+1)$ for the (T+1)th time unit. If cumulative weight sums are the same and a quantity exceeds $L_{rx}$, one element is randomly selected.

For example, it is assumed that T=4, $\beta$=0.9, c=1, e=0, $N_{rx}$=5, and $L_{rx}$=3, where $a(1)$=0.729, $a(2)$=1.215, $a(3)$=1.08, and $a(4)$=1.1. In addition, $S(1)$ = {1,2,3}, $S(2)$ = {1,3,5}, $S(3)$ = {2,4,5}, and $S(4)$ = {1,2,3}. In other words, three antennas included in the first antenna subset $S(1)$ corresponding to the 1st time unit are antennas corresponding to antenna numbers 1, 2, and 3; three antennas included in the first antenna subset $S(2)$ corresponding to the 2nd time unit are antennas corresponding to antenna numbers 1, 3, and 5; three antennas included in the first antenna subset $S(3)$ corresponding to the 3rd time unit are antennas corresponding to antenna numbers 2, 4, and 5; and three antennas included in the first antenna subset $S(4)$ corresponding to the 4th time unit are antennas corresponding to antenna numbers 1, 2, and 3. The following may be obtained by first weighting the four first antenna subsets and the four weight coefficients and then obtaining the union:

$$R = a(1)S(1) \cup a(2)S(2) \ldots \cup a(\mathrm{T})S(\mathrm{T})$$

$$= 0.729 \times \{1, 2, 3\} \cup 1.215 \times \{1, 3, 5\} \cup 1.08 \times \{2, 4, 5\} \cup 1.1 \times \{1, 2, 3\}$$

$$= \{1(3.044), 2(2.909), 3(3.044), 4(1.08), 5(2.295)\}$$

Then, first three antenna numbers with largest weight values are selected from $R$ as selected antenna elements, that is, S(T + 1) = {1,2,3}.

S403: The second device communicates with the first device by using the first antenna subset corresponding to the (T+1)th time unit.

In some feasible implementations, the second device may perform communication with the first device by using the first antenna subset corresponding to the (T+1)th time unit. Herein, that the second device communicates with the first device by using the first antenna subset corresponding to the (T+1)th time unit may be understood as communicating with the first device in the (T+1)th time unit to a (T+x)th time unit by using the first antenna subset corresponding to the (T+1)th time unit, where x is an integer greater than 0. For ease of description, x=0 is mainly used for description in the following. That is, data communication is performed with the first device in the (T+1)th time unit by using the first antenna subset corresponding to the (T+1)th time unit. The communication herein may be understood as data communication. For example, the second device receives, in the (T+1)th time unit by using the first antenna subset $S(T+1)$ corresponding to the (T+1)th time unit, uplink user data from the first device.

Optionally, when receiving, in the (T+1)th time unit by using the first antenna subset $S(T+1)$ corresponding to the (T+1)th time unit, the uplink user data from the first device, the second device may further collect statistics about a signal-to-interference ratio $\gamma(T+1)$ in the (T+1)th time unit. Further, the second device calculates a weight coefficient $a$(T+1) of the first antenna subset $S(T+1)$ corresponding to the (T+1)th time unit, and updates weight coefficients of first antenna subsets corresponding to a 2nd time unit to a Tth time unit. Specifically, that the second device calculates the weight coefficient $a$(T+1) of the first antenna subset $S(T+1)$ corresponding to the (T+1)th time unit, and updates the weight coefficients of the first antenna subsets corresponding to the 2nd time unit to the Tth time unit may be implemented by using the following steps.

In a first step, the second device receives, in the $(T+1)^{th}$ time unit by using the first antenna subset $S(T+1)$ corresponding to the $(T+1)^{th}$ time unit, the uplink user data from the first device, and collects statistics about the signal-to-interference ratio $\gamma(T+1)$ in the $(T+1)^{th}$ time unit.

In a second step, the second device obtains a first queue, deletes, at the head of the first queue, a signal-to-interference ratio $\gamma(1)$ corresponding to a $1^{st}$ time unit, and stores the signal-to-interference ratio $\gamma(T+1)$ corresponding to the $(T+1)^{th}$ time unit into the end of the first queue, to obtain an updated first queue. For example, as shown in FIG. 6, a front of the updated first queue is a signal-to-interference ratio y(2) corresponding to a $2^{nd}$ time unit, a $2^{nd}$ position of the updated first queue is a signal-to-interference ratio y(3) corresponding to a $3^{rd}$ time unit, ..., and a rear of the updated first queue is a signal-to-interference ratio $\gamma(T+1)$ corresponding to a $(T+1)^{th}$ time unit. In other words, the updated first queue sequentially includes T signal-to-interference ratios corresponding to the $2^{nd}$ time unit to the $(T+1)^{th}$ time unit.

In a third step, the second device updates a weight coefficient $a(t)$ of a first antenna subset corresponding to a $t^{th}$ time unit, and determines a weight coefficient $a(T+1)$ of a first antenna subset corresponding to the $(T+1)^{th}$ time unit. The weight coefficient $a(t)$ of the first antenna subset corresponding to the $t^{th}$ time unit is determined based on the $i^{th}$ element $w(i)$ in the first sequence and a signal-to-interference ratio $\gamma(t)$ corresponding to the $t^{th}$ time unit in the updated first queue, t= $\{2, ..., T\}$, and i=$\{1, 2, ..., T-1\}$. The weight coefficient $a(T+1)$ of the first antenna subset corresponding to the $(T+1)^{th}$ time unit is determined based on a $T^{th}$ element of the updated first queue and a signal-to-interference ratio during the communication in the $(T+1)^{th}$ time unit.

For example, it is assumed that the first sequence=$\{0.729, 0.81, 0.9, 1\}$, and T=4. The first sequence sequentially stores the following: a signal-to-interference ratio corresponding to a $1^{st}$ time unit, that is, $\gamma(1)$=1; a signal-to-interference ratio corresponding to a $2^{nd}$ time unit, that is, $\gamma(2)$=1.5; a signal-to-interference ratio corresponding to a $3^{rd}$ time unit, that is, $\gamma(3)$=1.2; and a signal-to-interference ratio corresponding to a $4^{th}$ time unit, that is, $\gamma(4)$=1.1. That is, the first queue=$\{1, 1.5, 1.2, 1.1\}$. Therefore, the following may be calculated: a weight coefficient of a first antenna subset corresponding to the $1^{st}$ time unit, that is, $a(1)$=1×0.729=0.729; a weight coefficient of a first antenna subset corresponding to the $2^{nd}$ time unit, that is, $a(2)$=1.5×0.81=1.215; a weight coefficient of a first antenna subset corresponding to the $3^{rd}$ time unit, that is, $a(3)$=1.2×0.9=1.08; and a weight coefficient of a first antenna subset corresponding to the $4^{th}$ time unit, that is, $a(4)$=1.1×1=1.1.

It is also assumed that a signal-to-interference ratio corresponding to a $5^{th}$ time unit is subsequently obtained in the $5^{th}$ time unit, that is, y(5)=1.8. In this case, the signal-to-interference ratio corresponding to the $1^{st}$ time unit, that is, $\gamma(1)$=1, may be deleted at the head of the first queue, and the signal-to-interference ratio corresponding to the $5^{th}$ time unit, that is, $\gamma(5)$=1.8, is stored into the end of the first queue, to obtain an updated first queue. That is, the updated first queue=$\{1.5, 1.2, 1.1, 1.8\}$. Therefore, the following may be updated: the weight coefficient of the first antenna subset corresponding to the $2^{nd}$ time unit, that is, $a(2)$=1.5×0.729=1.0935; the weight coefficient of the first antenna subset corresponding to the $3^{rd}$ time unit, that is, $a(3)$=1.2×0.81=0.972; and the weight coefficient of the first antenna subset corresponding to the $4^{th}$ time unit, that is, $a(4)$=1.1×0.9=0.99. The following may be calculated: a weight coefficient of the first antenna subset corresponding to the $5^{th}$ time unit, that is, $a(5)$=1.8×1=1.8.

Optionally, in some feasible implementations, the second device may further send a first message to the first device, and correspondingly, the first device receives the first message from the second device. The first message includes T. Optionally, the second device may further send a second message to the first device, and correspondingly, the first device receives the second message from the second device. The second message includes β. It may be understood that the second device may periodically send the first message and/or the second message to the first device, or the second device may aperiodically send the first message and/or the second message to the first device. That is, the first message and/or the second message may be sent periodically, or may be sent aperiodically. Generally, periodic sending is a timer value specified in a standard protocol, while aperiodic sending may be triggered based on a specific event. For example, the following events are listed based on factors that affect an electromagnetic wave in a propagation environment:

(1) an obstacle suddenly appears or disappears on a channel path between the first device and the second device;
(2) a movement speed of the first device suddenly changes, with a change including a speed value and/or a movement direction;
(3) a strong interference source suddenly appears near the first device; and
(4) a physical (downtilt) angle or a virtual beam angle of an antenna of the second device suddenly changes.

Optionally, in some feasible implementations, values of T and β are not always unchanged, and may be adjusted based on a channel state or a propagation environment. Generally, a more intense change of an electromagnetic wave in a propagation environment indicates a smaller value of T and a smaller value of the degradation failure coefficient β (that is, a faster degradation failure). A smallest value of T is 0 (that is, a channel with no memory), and a largest value is a ratio of a channel coherence time (coherence time) to a symbol period (symbol period). The channel coherence time is a largest time difference range during which a channel remains constant, while the symbol period is a time period for which one modulation symbol lasts. A smallest value of β is 0 (that is, a channel with no memory), and a largest value is 1 (that is, a channel with no degradation).

For example, when an average value of the T signal-to-interference ratios corresponding to the T time units is less than or equal to a first preset threshold, the value of T may be increased; or when the average value of the T signal-to-interference ratios corresponding to the T time units is greater than or equal to a second preset threshold, the value of T may be decreased. The first preset threshold is less than the second preset threshold. Herein, an increase or decrease amplitude may be determined based on an actual scenario, and is not limited herein. For example, when the value of T is increased, the value of the original T may be doubled, that is, changed to 2T; or when the value of T is decreased, the value of the original T may be halved, that is, changed to T/2.

In still another example, when a variance of the signal-to-interference ratios corresponding to the T time units is less than or equal to a third preset threshold, the value of β may be increased; or when the variance of the signal-to-interference ratios corresponding to the T time units is greater than or equal to a fourth preset threshold, the value of β may be decreased. The third preset threshold is less than the fourth preset threshold. Herein, an increase or decrease amplitude may be determined based on an actual scenario, and is not limited herein. For example, when the value of β is increased, a value △β may be added to the value of the original β, that is, β+△β; or when the value of β is decreased, a value △β may be subtracted from the value of the original β, that is, β-△β. △β is a constant greater than 0.

It should be noted that when the value of T or β is updated, an updated value of T or β further needs to be sent to the first device.

In embodiments of this application, historical a priori information (that is, the T first antenna subsets corresponding to the T time units before the $(T+1)^{th}$ time unit and the T weight coefficients of the T first antenna subsets) is obtained. Then, the historical a priori information is used to predict/derive an antenna configuration (that is, the first antenna subset that corresponds to the $(T+1)^{th}$ time unit and that is determined based on the T first antenna subsets and the T weight coefficients) corresponding to the $(T+1)^{th}$ time unit. In this way, a quantity of antennas same as a quantity of radio frequency channels can be selected from an antenna array of the second device, to achieve optimal or near-optimal reception effect. In addition, such a manner of determining, through historical a priori information derivation, the first antenna subset corresponding to the $(T+1)^{th}$ time unit can reduce channel sounding and signaling overheads, and reduce calculation complexity of a calculation process of determining the first antenna subset corresponding to the $(T+1)^{th}$ time unit.

FIG. 7 is another schematic flowchart of a communication method according to an embodiment of this application. As shown in FIG. 7, the communication method includes the following steps S701 to S704. An execution body of the method shown in FIG. 7 may be a first device or a second device. Alternatively, an execution body of the method shown in FIG. 7 may be a chip in a first device or a second device. The following embodiments of this application are described by using the first device and the second device as an example. The first device may be specifically understood as a UE, and the second device may be specifically understood as an access network device. It should be noted that a procedure shown in FIG. 7 is mainly for a scenario in which the first device is one terminal device equipped with $N_{tx}$=2 antennas and $L_{tx}$=2 radio frequency channels, the second device is one access network device equipped with $N_{rx}$ antennas and $L_{rx}$ radio frequency channels, and the quantity $N_{rx}$ of antennas of the second device > the quantity $L_{rx}$ of radio frequency channels.

S701: The second device obtains T first antenna subsets corresponding to T time units before a $(T+1)^{th}$ time unit and T weight coefficients of the T first antenna subsets.

Herein, for understanding of step S701, refer to the descriptions of S401 in FIG. 4. A difference lies in that: ①The first device in FIG. 4 is a single-antenna device, while the first device in FIG. 7 is a multi-antenna device (for example, has two antennas). Therefore, when sending a first channel sounding sequence, the first device needs to separately send the first channel sounding sequence to the second device by using two antennas in step S701. The first channel sounding sequence sent by the two antennas is an orthogonal codeword sequence, so that the second device can distinguish between first channel sounding sequences from different antennas. Therefore, a first channel matrix H(t) obtained by the second device by monitoring the first channel sounding sequence in a $t^{th}$ time unit is a matrix with $N_{rx}$ rows and $N_{tx}$ columns, where $N_{rx}$ represents a quantity of antennas of the second device, and $N_{tx}$ represents a quantity of antennas of the first device. Each matrix element is represented as a complex number $h_{n,m}$, $1 \le n \le N_{rx}$, and $1 \le m \le N_{tx}$. When $N_{tx}$=2, the first channel matrix H(t) corresponding to the $t^{th}$ time unit is a matrix with $N_{rx}$ rows and 2 columns. ②In step S701, when the second device determines, from the $N_{rx}$ antennas based on the first channel matrix H(t), a first antenna subset corresponding to the $t^{th}$ time unit, a channel response $h_{n,*}$ used in calculation of a received power $p_n$ of each antenna is a row vector, that is, a row vector including all column elements in an $n^{th}$ row of the channel matrix. That is, a received power of each antenna is $p_n = h_{n,*}^* h_{n,*}$ , and $1 \le n \le N_{rx}$.

S702: The second device determines, based on the T first antenna subsets and the T weight coefficients, a first antenna subset corresponding to the $(T+1)^{th}$ time unit.

Herein, for understanding of step S702, refer to the descriptions of S402 in FIG. 4. Details are not described herein again.

S703: The second device sends first indication information to the first device. Correspondingly, the first device receives the first indication information from the second device.

The first indication information indicates a first antenna, the $N_{tx}$ antennas include the first antenna, and the first antenna is used by the first device to perform communication with the second device. In other words, the second device needs to determine an antenna configuration scheme, and send the antenna configuration scheme to the first device, to suggest which one of a plurality of antennas should be used by the first device to send uplink user data to the second device in a subsequent data sending process.

For example, the second device may determine the first antenna from the $N_{tx}$ antennas based on the first antenna subset S(T+1) corresponding to the (T+1)$^{th}$ time unit and the first channel matrix H(t) corresponding to the t$^{th}$ time unit, where t is an integer, and t $\in$ [1, T]. A specific calculation manner is as follows.

In a first step, represent S(T+1) generated in step S702 as one column vector of $L_{rx}$ rows and one column.

In a second step, obtain a first channel matrix H(t) corresponding to any one (the t$^{th}$ time unit is used as an example) of a 1$^{st}$ time unit to a T$^{th}$ time unit, and extract $L_{rx}$ rows and all columns defined by S(T+1) from the first channel matrix H(t), to form a new channel matrix $\tilde{\mathbf{H}}$ with $L_{rx}$ rows and $N_{tx}$ columns. In other words, a small matrix needs to be obtained from a large matrix. A reason is that the first channel matrix H(t) from the 1$^{st}$ time unit to the T$^{th}$ time unit includes $N_{rx}$ rows and $N_{tx}$ columns. However, the quantity $L_{rx}$ of radio frequency channels of the second device < the quantity $N_{rx}$ of antennas. Therefore, in the (T+1)$^{th}$ time unit, $L_{rx}$ antennas need to be selected from the $N_{rx}$ antennas to perform data transmission in the (T+1)$^{th}$ time unit.

In a third step, use a regularized zero-forcing (regularized zero-forcing, RZF) algorithm as follows:

$$\mathbf{W} = (\tilde{\mathbf{H}}^* \tilde{\mathbf{H}} + \psi \mathbf{I})^{-1} \tilde{\mathbf{H}}^* \quad (1)$$

A superscript '*' represents a conjugate transpose, a superscript '-1' represents matrix inversion, $\mathbf{I}$ is an identity matrix with $N_{tx}$ rows and $N_{tx}$ columns, and $\psi$ is a regularization coefficient. Particularly, a value of the regularization coefficient $\psi$ varies depending on different channel quality, and the value usually ranges from $10^{-3}$ to $10^3$. $\mathbf{W}$ is a matrix with $N_{tx}$ rows and $L_{rx}$ columns.

In a fourth step, the antenna configuration scheme F for the first device is calculated as the following formula:

$$\mathbf{F} = (\mathbf{W} \tilde{\mathbf{H}})^* (\mathbf{W} \tilde{\mathbf{H}} \tilde{\mathbf{H}}^* \mathbf{W}^*)^{-1} \quad (2)$$

**F** is a matrix with $L_{rx}$ rows and $N_{rx}$ columns. It may be understood that **F** indicates a configuration scheme for all transmit antennas, that is, how to map $N_{rx}$ antennas to $L_{rx}$ radio frequency channels. In addition, **F** further indicates phase offset values of these transmit antennas. Therefore, the first antenna may be determined based on the antenna configuration scheme **F**.

S704: The second device communicates with the first device by using the first antenna subset corresponding to the (T+1)$^{th}$ time unit.

Herein, for understanding of step S704, refer to the descriptions of S403 in FIG. 4. A difference lies in that: because the first device includes a plurality of antennas, after the first device receives the first indication information from the second device, the first device communicates with the second device by using the first antenna indicated by the first indication information.

In this embodiment of this application, when the first device is configured with a plurality of antennas, in addition to selecting a local antenna topology scheme, the second device further suggests an antenna configuration scheme for the first device (that is, indicates the first antenna used by the first device), so that a propagation environment can be better matched, which helps improve a system throughput.

It should be noted that, when the first device is a plurality of (for example, two) terminal devices equipped with $N_{tx}$=1 antenna and $L_{tx}$=1 radio frequency channel, the second device is one access network device equipped with $N_{rx}$ antennas and $L_{rx}$ radio frequency channels, and the quantity $N_{rx}$ of antennas of the second device > the quantity $L_{rx}$ of radio frequency channels, steps S401 to S403 shown in FIG. 4 need to be performed for each first device. For example, the two first devices are a first device 1 and a first device 2. Therefore, for each first device, a quantity of antennas same as a quantity of radio frequency channels can be selected from an antenna array of the second device and the antennas are connected to the radio frequency channels, to achieve optimal or near-optimal reception effect with the first device. In other words, when the first device 1 and the first device 2 simultaneously send uplink user data to the second device, and the second device uses a first antenna subset S1(T+1) corresponding to the (T+1)$^{th}$ time unit in the first device 1 and a first antenna subset S2(T+1) corresponding to the (T+1)$^{th}$ time unit in the first device 2, to respectively receive the uplink user data from the first device 1 and the first device 2, first antenna subsets S1(T+1) and S2(T+1) can minimize interference between signals from the plurality of first devices to the second device.

It should be noted that, when the first device is a plurality of (for example, two) terminal devices equipped with

$N_{tx}$=2 antennas and $L_{tx}$=2 radio frequency channels, the second device is one access network device equipped with $N_{rx}$ antennas and $L_{rx}$ radio frequency channels, and the quantity $N_{rx}$ of antennas of the second device > the quantity $L_{rx}$ of radio frequency channels, steps S701 to S704 shown in FIG. 7 need to be performed for each first device.

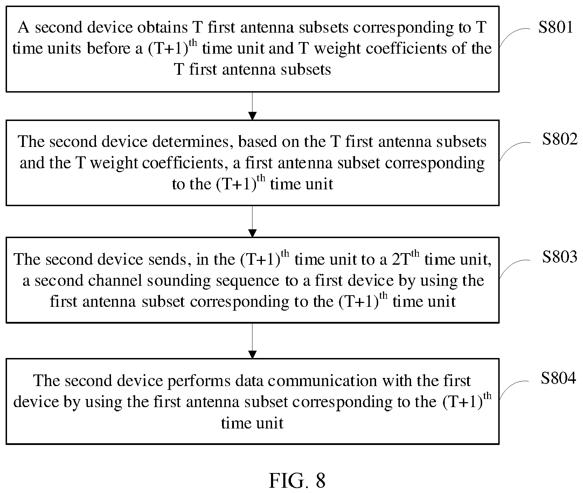

FIG. 8 is another schematic flowchart of a communication method according to an embodiment of this application. As shown in FIG. 8, the communication method includes the following steps S801 to S804. An execution body of the method shown in FIG. 8 may be a first device or a second device. Alternatively, an execution body of the method shown in FIG. 8 may be a chip in a first device or a second device. The following embodiments of this application are described by using the first device and the second device as an example. The first device may be specifically understood as a UE, and the second device may be specifically understood as an access network device. It should be noted that a procedure shown in FIG. 8 is mainly for a scenario in which the first device is one terminal device equipped with multi-layer compact antennas of $N_{tx}$ antennas and $L_{tx}$ radio frequency channels, the quantity $N_{tx}$ of antennas of the first device > the quantity $L_{tx}$ of radio frequency channels, the second device is one access network device equipped with $N_{rx}$ antennas and $L_{rx}$ radio frequency channels, and the quantity $N_{rx}$ of antennas of the second device > the quantity $L_{rx}$ of radio frequency channels. It should be noted that, because the first device is a single-antenna device (that is, there is only one antenna), the first device can interact with the second device only by using the antenna.

S801: The second device obtains T first antenna subsets corresponding to T time units before a (T+1)$^{th}$ time unit and T weight coefficients of the T first antenna subsets.

S802: The second device determines, based on the T first antenna subsets and the T weight coefficients, a first antenna subset corresponding to the (T+1)$^{th}$ time unit.

It should be noted that, for understanding of steps S801 and S802, refer to the descriptions of steps S401 and S402 in FIG. 4. Details are not described herein again.

S803: The second device sends, in the (T+1)$^{th}$ time unit to the 2T$^{th}$ time unit, a second channel sounding sequence to the first device by using the first antenna subset corresponding to the (T+1)$^{th}$ time unit. Correspondingly, the first device receives the second channel sounding sequence from the second device in the (T+1)$^{th}$ time unit to the 2T$^{th}$ time unit.

The second channel sounding sequence is used to determine T second antenna subsets, each second antenna subset in the T second antenna subsets and a weight coefficient of each second antenna subset are used to determine a second antenna subset corresponding to a (2T+1)$^{th}$ time unit in the first device, and the T second antenna subsets are second antenna subsets corresponding to the (T+1)$^{th}$ time unit to the 2T$^{th}$ time unit. For implementation solutions of how the second device determines, based on the second channel sounding sequence, the second antenna subsets corresponding to the (T+1)$^{th}$ time unit to the 2T$^{th}$ time unit, and how the second device determines, based on the determined second antenna subsets corresponding to the (T+1)$^{th}$ time unit to the 2T$^{th}$ time unit and the weight coefficient of each second antenna subset, the second antenna subset corresponding to the (2T+1)$^{th}$ time unit, refer to the descriptions of how the first device determines, based on the first channel sounding sequence, the first antenna subsets corresponding to the 1$^{st}$ time unit to the T$^{th}$ time unit, and the descriptions of how the first device determines, based on the determined first antenna subsets corresponding to the 1$^{st}$ time unit to the T$^{th}$ time unit and the weight coefficient of each first antenna subset, the first antenna subset corresponding to the (T+1)$^{th}$ time unit. Details are not described herein again.

S804: The second device performs data communication with the first device by using the first antenna subset corresponding to the (T+1)$^{th}$ time unit. Correspondingly, the first device performs data communication with the first device by using the second antenna subset corresponding to the (2T+1)$^{th}$ time unit.

Herein, the data communication between the first device and the second device may be understood as that the first device sends uplink user data to the second device. An antenna used by the first device to send the uplink user data is the first antenna subset corresponding to the (T+1)$^{th}$ time unit, and an antenna used by the second device to receive the uplink user data is the second antenna subset corresponding to the (2T+1)$^{th}$ time unit.

In this embodiment of this application, when the first device is also configured with a plurality of antennas, and a quantity of the plurality of antennas is greater than a quantity of radio frequency channels in the first device, the second device may further send the second channel sounding sequence to the first device, so that the first device determines an optimal second antenna subset corresponding to the (2T+1)$^{th}$ time unit in the first device, thereby increasing universality of this solution.

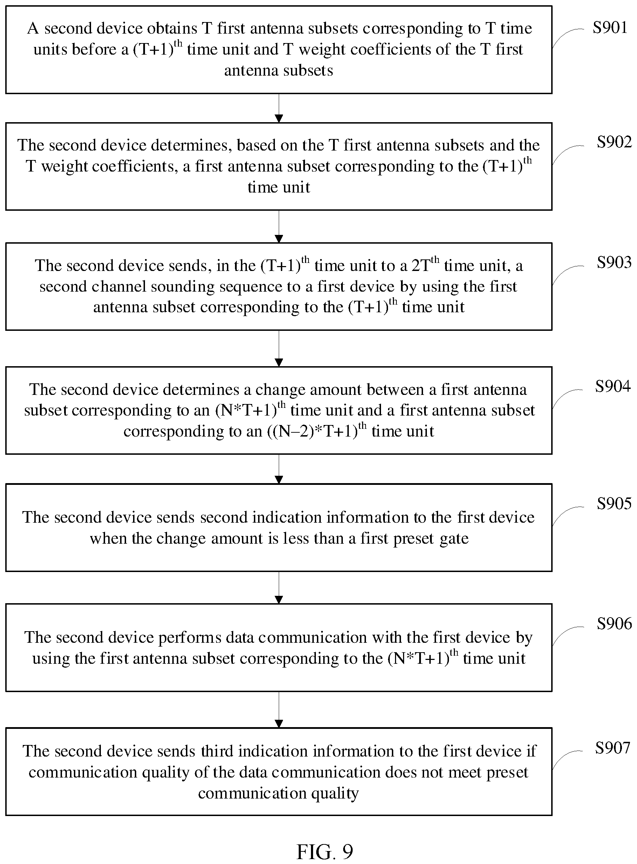

Optionally, for a scenario in which the first device is one terminal device equipped with multi-layer compact antennas of $N_{tx}$ antennas and $L_{tx}$ radio frequency channels, the quantity $N_{tx}$ of antennas of the first device > the quantity $L_{tx}$ of radio frequency channels, the second device is one access network device equipped with $N_{rx}$ antennas and $L_{rx}$ radio frequency channels, and the quantity $N_{rx}$ of antennas of the second device > the quantity $L_{rx}$ of radio frequency channels, in another implementation, steps S901 to S907 shown in FIG. 9 are further included.

S901: The second device obtains T first antenna subsets corresponding to T time units before a (T+1)$^{th}$ time unit and T weight coefficients of the T first antenna subsets.

S902: The second device determines, based on the T first antenna subsets and the T weight coefficients, a first antenna subset corresponding to the (T+1)$^{th}$ time unit.

S903: The second device sends, in the $(T+1)^{th}$ time unit to the $2T^{th}$ time unit, a second channel sounding sequence to the first device by using the first antenna subset corresponding to the $(T+1)^{th}$ time unit. Correspondingly, the first device receives the second channel sounding sequence from the second device in the $(T+1)^{th}$ time unit to the $2T^{th}$ time unit.

It should be noted that, for understanding of steps S901 and S903, refer to the descriptions of steps S801 and S803 in FIG. 8. Details are not described herein again.

S904: The second device determines a change amount between a first antenna subset corresponding to an $(N*T+1)^{th}$ time unit and a first antenna subset corresponding to an $((N-2)*T+1)^{th}$ time unit.

N is an integer greater than 2. In other words, S901 to S903 may be iterated N times. Further, the second device determines whether the change amount between the first antenna subset corresponding to the $(N*T+1)^{th}$ time unit and the first antenna subset corresponding to an $S((N-2)*T+1)^{th}$ time unit is less than a first preset gate.

S905: The second device sends second indication information to the first device when the change amount is less than the first preset gate. Correspondingly, the first device receives the second indication information from the second device.

It may be understood that when the change amount is less than the first preset gate, it is considered that the first antenna subset corresponding to the $(N*T+1)^{th}$ time unit has converged and tends to be stable. Therefore, the second device may send the second indication information to the first device. The second indication information indicates the first device to perform data communication with the second device by using a second antenna subset corresponding to an $((N-1)*T+1)^{th}$ time unit. Alternatively, it is understood that the second indication information notifies the first device to stop iteration.

S906: The second device performs data communication with the first device by using the first antenna subset corresponding to the $(N*T+1)^{th}$ time unit.

Herein, that the second device communicates with the first device by using the first antenna subset corresponding to the $(N*T+1)^{th}$ time unit may be understood as communicating with the first device in the $(N*T+1)^{th}$ time unit to an $((N*T+1)+x)^{th}$ time unit by using the first antenna subset corresponding to the $(N*T+1)^{th}$ time unit, where x is an integer greater than 0. For ease of description, x=0 is mainly used for description in the following. That is, data communication is performed with the first device in the $(N*T+1)^{th}$ time unit by using the first antenna subset corresponding to the $(N*T+1)^{th}$ time unit. The communication herein may be understood as data communication. For example, the second device receives, in the $(N*T+1)^{th}$ time unit by using the first antenna subset $S(N * T + 1)$ corresponding to the $(N*T+1)^{th}$ time unit, uplink user data from the first device. For another example, the second device sends downlink user data to the first device in the $(N*T+1)^{th}$ time unit by using the first antenna subset $S(N * T + 1)$ corresponding to the $(N*T+1)^{th}$ time unit.

In this implementation, when the first device is configured with a plurality of antennas, and a quantity of the plurality of antennas is greater than a quantity of radio frequency channels in the first device, through iterative interaction between transmit and receive ends, antenna topologies on both sides reach a converged and stable state at the same time, achieving an optimal antenna topology that best adapts to a propagation environment, which helps improve a system throughput.

Optionally, after S906, that is, after performing data communication with the first device by using the first antenna subset corresponding to the $(N*T+1)^{th}$ time unit, the method may further include the following step S907.

S907: The second device sends third indication information to the first device if communication quality of the data communication does not meet preset communication quality. Correspondingly, the first device receives the third indication information from the second device.

The third indication information indicates the second device to send a first channel sounding sequence, and the first channel sounding sequence is used to update a first antenna subset used for data communication between the second device and the first device. In other words, by monitoring communication performance, the second device and the first device may dynamically restart and stop a process of iteratively sending channel sounding sequences (that is, the first channel sounding sequence and the second channel sounding sequence) a plurality of times, that is, reiterate the foregoing steps S901 to S905, so that dynamic antenna topologies of both devices can better adapt to a method procedure of a time-varying channel. The communication quality may be reflected by a bit error rate (bit error rate, BER) or a block error rate (block error rate, BLER). This is not limited herein.

In this implementation, the second device detects quality of communication with the first device, to intermittently send a channel sounding sequence based on the quality of communication. This improves adaptability of the solution of this application to a time-varying channel, and improves robustness of a system throughput.

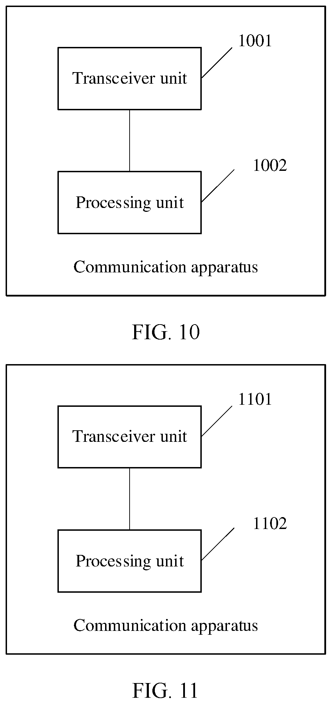

The following describes in detail communication apparatuses provided in this application with reference to FIG. 10 to FIG. 13.

FIG. 10 is a diagram of a structure of a communication apparatus according to an embodiment of this application. The communication apparatus shown in FIG. 10 may be configured to perform some or all functions of the first device in the method embodiments described in FIG. 4 to FIG. 9 The apparatus may be a first device, may be an apparatus in a first device, or may be an apparatus that can be used in combination with a first device. The communication apparatus may alternatively be a chip system. The communication apparatus shown in FIG. 10 may include a transceiver unit 1001 and a processing unit 1002. The processing unit 1002 is configured to perform data processing. The transceiver unit 1001 is integrated with a receiving unit and a sending unit. The transceiver unit 1001 may also be referred to as a communication unit. Alternatively, the transceiver unit 1001 may be split into a receiving unit and a sending unit. Descriptions of the processing unit 1002 below are similar to those of the transceiver unit 1001, and details are not described below again.

The processing unit 1002 is configured to determine a first channel sounding sequence.

The transceiver unit 1001 is configured to send the first channel sounding sequence to a second device in a $t^{th}$ time unit in T time units. T is a positive integer, the first channel sounding sequence is used to determine a first channel matrix H(t), the first channel matrix H(t) is a matrix with $N_{rx}$ rows and $N_{tx}$ columns, $N_{rx}$ is a quantity of antennas included in the second device, $N_{tx}$ is a quantity of antennas included in the first device, $N_{rx}$ and $N_{tx}$ are integers greater than 0, t={1, 2, ..., T}, the first channel matrix H(t) is used to determine, from the $N_{rx}$ antennas, a first antenna subset corresponding to the $t^{th}$ time unit, each first antenna subset in T first antenna subsets corresponding to the T time units and a weight coefficient of each first antenna subset are used to determine a first antenna subset corresponding to a $(T+1)^{th}$ time unit in the second device, each first antenna subset includes $L_{rx}$ antennas, the $L_{rx}$ antennas are $L_{rx}$ antennas in the $N_{rx}$ antennas, $L_{rx}$ is a positive integer, and $N_{rx}>L_{rx}$.

In a possible implementation, the transceiver unit 1001 is further configured to:

perform communication with the second device in the $(T+1)^{th}$ time unit to a $(T+x)^{th}$ time unit, where x is an integer greater than 0.

In a possible implementation, the transceiver unit 1001 is further configured to:

receive a first message from the second device, where the first message includes T.

In a possible implementation, the transceiver unit 1001 is further configured to:

receive a second message from the second device, where the second message includes a degradation failure coefficient β.

In a possible implementation, $N_{tx}$ is an integer greater than 1.

The transceiver unit 1001 is further configured to:

receive first indication information from the second device. The first indication information indicates a first antenna, the $N_{tx}$ antennas include the first antenna, and the first antenna is used by the first device to perform communication with the second device.

In a possible implementation, the first device further includes $L_{tx}$ radio frequency channels, $N_{tx}$ and $L_{tx}$ are positive integers, $N_{tx}>L_{tx}$, and x is equal to T. When communicating with the second device in the $(T+1)^{th}$ time unit to the $(T+x)^{th}$ time unit, the transceiver unit 1001 is further configured to:

receive a second channel sounding sequence from the second device in the $(T+1)^{th}$ time unit to a $2T^{th}$ time unit. The second channel sounding sequence is used to determine T second antenna subsets, each second antenna subset in the T second antenna subsets and a weight coefficient of each second antenna subset are used to determine a second antenna subset corresponding to a $(2T+1)^{th}$ time unit in the first device, and the T second antenna subsets are second antenna subsets corresponding to the $(T+1)^{th}$ time unit to the $2T^{th}$ time unit.

In a possible implementation, the transceiver unit 1001 is further configured to:

receive second indication information from the second device. The second indication information indicates the first device to use a second antenna subset corresponding to an $((N-1)^*T+1)^{th}$ time unit to perform data communication with the second device, and N is an integer greater than 2.

In a possible implementation, the transceiver unit 1001 is further configured to:

receive third indication information from the second device. The third indication information indicates the first device to send the first channel sounding sequence, and the first channel sounding sequence is used to update a first antenna subset used for data communication between the second device and the first device.

For another possible implementation of the communication apparatus, refer to related descriptions of the functions of the first device in the method embodiments corresponding to FIG. 4 to FIG. 9. Details are not described herein.

FIG. 11 is a diagram of a structure of another communication apparatus according to an embodiment of this application. The communication apparatus shown in FIG. 11 may be configured to perform some or all functions of the second device in the method embodiments described in FIG. 4 to FIG. 9. The apparatus may be a second device, may be an apparatus in a second device, or may be an apparatus that can be used in combination with a second device. The communication apparatus may alternatively be a chip system. The communication apparatus shown in FIG. 11 may include a transceiver unit 1101 and a processing unit 1102.

The transceiver unit 1101 is configured to obtain T first antenna subsets corresponding to T time units before a $(T+1)^{th}$ time unit and T weight coefficients of the T first antenna subsets. The T first antenna subsets corresponding to the T time units are determined based on a first channel sounding sequence, T is a positive integer, each first antenna subset includes $L_{rx}$ antennas, the $L_{rx}$ antennas are $L_{rx}$ antennas in the $N_{rx}$ antennas, and the T first antenna subsets are used for communication with a first device in the T time units.

The processing unit 1102 is configured to determine, based on the T first antenna subsets and the T weight coefficients, a first antenna subset corresponding to the $(T+1)^{th}$ time unit.

The transceiver unit 1101 is configured to perform communication with the first device by using the first antenna subset corresponding to the $(T+1)^{th}$ time unit.

In a possible implementation, when communicating with the first device by using the first antenna subset corresponding to the $(T+1)^{th}$ time unit, the transceiver unit 1101 is configured to:

perform communication with the first device in the $(T+1)^{th}$ time unit to a $(T+x)^{th}$ time unit by using the first antenna subset corresponding to the $(T+1)^{th}$ time unit, where x is an integer greater than 0.

In a possible implementation, when obtaining the T first antenna subsets corresponding to the T time units, the transceiver unit 1101 is configured to:

receive, in a $t^{th}$ time unit in the T time units, the first channel sounding sequence from the first device by using s antenna subsets, where the first channel sounding sequence is used to determine a first channel matrix H(t), the first channel matrix H(t) is a matrix with $N_{rx}$ rows and $N_{tx}$ columns, $N_{tx}$ is a quantity of antennas included in the first device, $N_{tx}$ is an integer greater than 0, each antenna subset in the s antenna subsets includes $L_{rx}$ antennas, at least one antenna

$$s = \left\lceil \frac{N_{rx}}{L_{rx}} \right\rceil$$

differs between antennas included in different antenna subsets, t={1, 2, ..., T}, and $\qquad$ ; and

determine, from the $N_{rx}$ antennas based on the first channel matrix H(t), a first antenna subset corresponding to the $t^{th}$ time unit.

In a possible implementation, the transceiver unit 1101 is further configured to:

send a first message to the first device, where the first message includes T.

In a possible implementation, the T time units correspond to T signal-to-interference ratios, and the processing unit 1102 is further configured to:

increase a value of T when an average value of the T signal-to-interference ratios corresponding to the T time units is less than or equal to a first preset threshold; or

decrease a value of T when an average value of the T signal-to-interference ratios corresponding to the T time units is greater than or equal to a second preset threshold. The first preset threshold is less than the second preset threshold.

In a possible implementation, a weight coefficient $a$(t) of the first antenna subset corresponding to the $t^{th}$ time unit is determined based on an $i^{th}$ element $w(i)$ in a first sequence and a signal-to-interference ratio $\gamma$(t) corresponding to the $t^{th}$ time unit, the first sequence is monotonically non-decreasing, t={1, 2, ..., T}, and i={1, 2, ..., T}.

In a possible implementation, the processing unit 1102 is further configured to:

obtain a first queue, where the first queue sequentially includes the T signal-to-interference ratios corresponding to the T time units;

obtain a signal-to-interference ratio corresponding to the $(T+1)^{th}$ time unit;

delete a signal-to-interference ratio corresponding to a $1^{st}$ time unit at the head of the first queue, and store the signal-to-interference ratio corresponding to the $(T+1)^{th}$ time unit into the end of the first queue, to obtain an updated first queue;

update the weight coefficient $a$(t) of the first antenna subset corresponding to the $t^{th}$ time unit, where the weight coefficient $a$(t) of the first antenna subset corresponding to the $t^{th}$ time unit is determined based on the $i^{th}$ element $w(i)$ in the first sequence and a signal-to-interference ratio $\gamma$(t) corresponding to the $t^{th}$ time unit in the updated first queue, t={2, ..., T}, and i={1, 2, ..., T-1}; and

determine a weight coefficient $a$(T+1) of the first antenna subset corresponding to the $(T+1)^{th}$ time unit, where the weight coefficient $a$(T+1) of the first antenna subset corresponding to the $(T+1)^{th}$ time unit is determined based on a $T^{th}$ element of the updated first queue and a signal-to-interference ratio during the communication in the $(T+1)^{th}$ time unit.

In a possible implementation, w(i) satisfies:

$$w(i) = d,$$

where

$$d \in [0, 1].$$

In a possible implementation, the first sequence is determined based on a degradation failure coefficient β and T, where $\beta \in [0, 1]$.

In a possible implementation, w(i) satisfies:

$$w(i)=c*(\beta)^{\mathrm{T}-i}+e,$$

where

$i=\{1, 2, ..., T\}$, c is a normal number, and e is a constant.

In a possible implementation, the T time units correspond to the T signal-to-interference ratios, and the processing unit 1102 is further configured to:

increase a value of β when a variance of the signal-to-interference ratios corresponding to the T time units is less than or equal to a third preset threshold; or

decrease a value of β when a variance of the signal-to-interference ratios corresponding to the T time units is greater than or equal to a fourth preset threshold. The third preset threshold is less than the fourth preset threshold.

In a possible implementation, the transceiver unit 1101 is further configured to:

send a second message to the first device. The second message includes β, and β is used to determine a weight coefficient of a second antenna subset corresponding to each time unit in the $(T+1)^{th}$ time unit to a $2T^{th}$ time unit for the first device.

In a possible implementation, the first antenna subset corresponding to the $(T+1)^{th}$ time unit includes $L_{rx}$ antennas with largest weight coefficients in a target antenna set, the target antenna set is a union of the T first antenna subsets, a weight coefficient of an antenna z in the target antenna set is a sum of weight coefficients of first antenna subsets to which the antenna z belongs, and the antenna z is any antenna in the target antenna set.

In a possible implementation, the first device includes $N_{tx}$ antennas, and $N_{tx}$ is an integer greater than 1.

The transceiver unit 1101 is further configured to:

send first indication information to the first device. The first indication information indicates a first antenna, the $N_{tx}$ antennas include the first antenna, and the first antenna is used by the first device to perform communication with the second device.

In a possible implementation, the transceiver unit 1101 is further configured to:

determine the first antenna from the $N_{tx}$ antennas based on the first antenna subset corresponding to the $(T+1)^{th}$ time unit and the first channel matrix H(t) corresponding to the $t^{th}$ time unit, where t is an integer, and $t \in [1, T]$.

In a possible implementation, the first device includes the $N_{tx}$ antennas and $L_{tx}$ radio frequency channels, $N_{tx}$ and $L_{tx}$ are positive integers, and $N_{tx}>L_{tx}$.

When communicating with the first device by using the first antenna subset corresponding to the $(T+1)^{th}$ time unit, the transceiver unit 1101 is configured to:

send, in the $(T+1)^{th}$ time unit to the $2T^{th}$ time unit, a second channel sounding sequence to the first device by using the first antenna subset corresponding to the $(T+1)^{th}$ time unit. The second channel sounding sequence is used to determine T second antenna subsets, each second antenna subset in the T second antenna subsets and a weight coefficient of each second antenna subset are used to determine a second antenna subset corresponding to a $(2T+1)^{th}$ time unit in the first device, and the T second antenna subsets are second antenna subsets corresponding to the $(T+1)^{th}$ time unit to the $2T^{th}$ time unit.

In a possible implementation, the processing unit 1102 is further configured to determine a change amount between a first antenna subset corresponding to an $(N*T+1)^{th}$ time unit and a first antenna subset corresponding to an $((N-2)*T+1)^{th}$ time unit, where N is an integer greater than 2.

The transceiver unit 1101 is further configured to send second indication information to the first device when the change amount is less than a first preset threshold. The second indication information indicates the first device to use a second antenna subset corresponding to an $((N-1)*T+1)^{th}$ time unit to perform data communication with the second device.

The transceiver unit 1101 is further configured to perform data communication with the first device by using the first antenna subset corresponding to the $(N*T+1)^{th}$ time unit.

In a possible implementation, after performing data communication with the first device by using the first antenna subset corresponding to the $(N*T+1)^{th}$ time unit, the processing unit 1102 is further configured to:

send third indication information to the first device by using the transceiver unit 1101 if communication quality of the data communication does not meet preset communication quality. The third indication information indicates the second device to send the first channel sounding sequence, and the first channel sounding sequence is used to update a first antenna subset used for data communication between the second device and the first device.

For another possible implementation of the communication apparatus, refer to related descriptions of the functions of the second device in the method embodiments corresponding to FIG. 4 to FIG. 9. Details are not described herein.

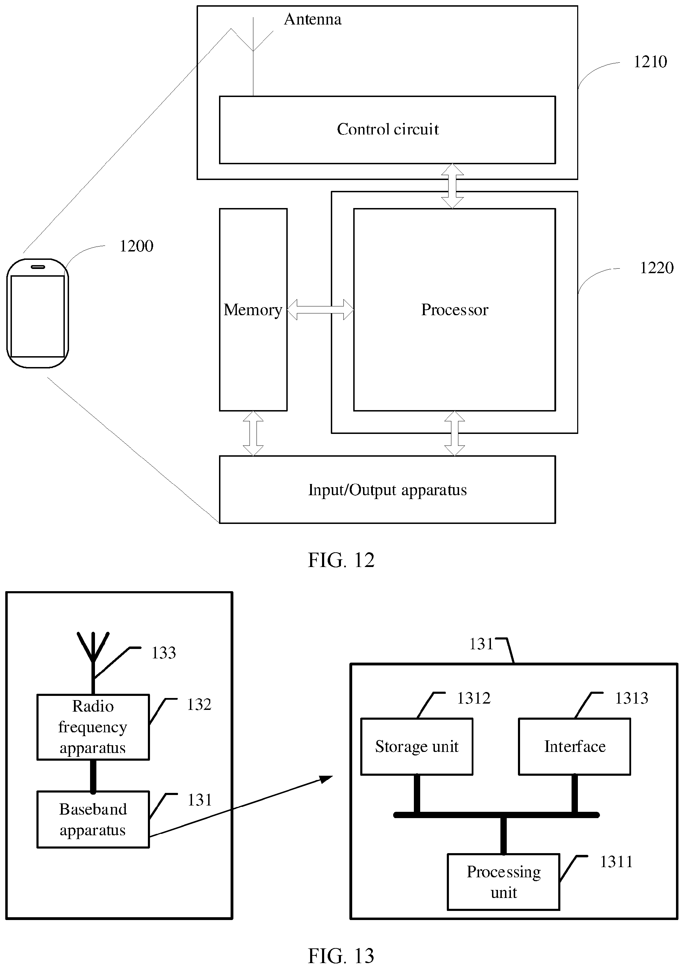

FIG. 12 is a diagram of a structure of another communication apparatus according to an embodiment of this application. As shown in FIG. 12, the communication apparatus may be the first device described in embodiments of this application, and is configured to implement functions of the first device in FIG. 4 to FIG. 9. The first device may be an access network device, or may be a terminal device. For ease of description, FIG. 12 is mainly described by using an example in which the first device is a terminal device. FIG. 12 shows only main components of the terminal device 1200. As shown in FIG. 12, the terminal device 1200 includes a processor, a memory, a control circuit, an antenna, and an input/output apparatus. The processor is mainly configured to process a communication protocol and communication data, control the entire terminal device 1200, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data input by a user and output data to the user. Optionally, the memory and the processor may be integrated together.

For example, the terminal device 1200 is a mobile phone. After the terminal device 1200 is powered on, the processor may read a software program in a storage unit, interpret and execute instructions of the software program, and process data of the software program. When data needs to be sent in a wireless manner, the processor performs baseband processing on the to-be-sent data and then outputs a baseband signal to the control circuit. The control circuit performs radio frequency processing on the baseband signal and then sends a radio frequency signal in a form of an electromagnetic wave by using the antenna. When data is sent to the terminal device 1200, the control circuit receives a radio frequency signal through the antenna, converts the radio frequency signal into a baseband signal, and outputs the baseband signal to the processor. The processor converts the baseband signal into data and processes the data.

A person skilled in the art may understand that, for ease of description, FIG. 12 shows only one memory and one processor. In some embodiments, the terminal device 1200 may include a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device 1200, execute the software program, and process the data of the software program. The processor in FIG. 12 integrates functions of the baseband processor and the central processing unit. A person skilled in the art may understand that the baseband processor and the central processing unit may alternatively be processors independent of each other, and are interconnected by using a technology such as a bus. The terminal device 1200 may include a plurality of baseband processors to adapt to different network standards. The terminal device 1200 may include a plurality of central processing units to enhance a processing capability of the terminal device 1200. Components of the terminal device 1200 may be connected through various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the storage unit in a form of a software program, and the processor executes the software program to implement a baseband processing function.

In an example, the antenna and the control circuit that have a receiving/sending function may be considered as a transceiver unit 1210 of the terminal device 1200, and the processor that has a processing function may be considered as a processing unit 1220 of the terminal device 1200. As shown in FIG. 12, the terminal device 1200 includes the transceiver unit 1210 and the processing unit 1220. The transceiver unit may also be referred to as a transceiver, a transceiver machine, a transceiver apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. For example, the receiving unit may also be referred to as a receiver, a receive machine, a receiving circuit, or the like, and the sending unit may also be referred to as a transmitter, a transmit machine, a transmitting circuit, or the like.

FIG. 13 is a diagram of a structure of another communication apparatus according to an embodiment of this application. As shown in FIG. 13, the communication apparatus may be the second device described in embodiments of this application, and is configured to implement functions of the second device in FIG. 4 to FIG. 9. The second device may be an access network device, or may be a terminal device. For ease of description, FIG. 13 is mainly described by using an example in which the second device is an access network device. The second device includes a baseband apparatus 131, a radio frequency apparatus 132, and an antenna 133. In an uplink direction, the radio frequency apparatus 132 receives, by using the antenna 133, information sent by a terminal device, and sends, to the baseband apparatus 131, the information sent by the terminal device for processing. In a downlink direction, the baseband apparatus 131 processes information from the terminal device, and sends processed information to the radio frequency apparatus 132. The radio frequency apparatus 132 processes the information from the terminal device, and then sends processed information to the terminal device through the antenna 133.

The baseband apparatus 131 includes one or more processing units 1311, a storage unit 1312, and an interface 1313. The processing unit 1311 is configured to support the network device in performing functions of the network device in the foregoing method embodiments. The storage unit 1312 is configured to store a software program and/or data. The interface 1313 is configured to exchange information with the radio frequency apparatus 132. The interface includes an interface circuit, configured to input and output information. In an implementation, the processing unit is an integrated circuit, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of such integrated circuits. These integrated circuits may be integrated together to form a chip. The storage unit 1312 and the processing unit 1311 may be located on a same chip, that is, on-chip storage elements. Alternatively, the storage unit 1312 and the processing unit 1311 may be located on different chips, that is, off-chip storage elements. The storage unit 1312 may be one memory, or may be a general term for a plurality of memories or storage elements. Optionally, the storage unit and the processing unit may be integrated together.

The second device may implement some or all of the steps in the foregoing method embodiments in a form of scheduling a program by using one or more processing units, for example, implement corresponding functions of the network device in FIG. 4 to FIG. 9. The one or more processing units may support radio access technologies of a same standard, or may support radio access technologies of different standards.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, the apparatus embodiments described above are merely examples. For example, division into units is merely logical function division. Units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, another magnetic storage device, or any other medium that can be used to carry or store expected program code in a form of an instruction or a data structure and that can be accessed by a computer. In addition, as an example description rather than a limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, wherein the method is applied to a first device, and the method comprises:

    determining a first channel sounding sequence; and
    sending the first channel sounding sequence to a second device in a $t^{th}$ time unit in T time units, wherein T is a positive integer, the first channel sounding sequence is used to determine a first channel matrix H(t), the first channel matrix H(t) is a matrix with $N_{rx}$ rows and $N_{tx}$ columns, $N_{rx}$ is a quantity of antennas comprised in the second device, $N_{tx}$ is a quantity of antennas comprised in the first device, $N_{rx}$ and $N_{tx}$ are integers greater than 0, t= {1, 2, ..., T}, the first channel matrix H(t) is used to determine, from the $N_{rx}$ antennas, a first antenna subset corresponding to the $t^{th}$ time unit, each first antenna subset in T first antenna subsets corresponding to the T time units and a weight coefficient of each first antenna subset are used to determine a first antenna subset corresponding to a $(T+1)^{th}$ time unit in the second device, each first antenna subset comprises $L_{rx}$ antennas, the $L_{rx}$ antennas are $L_{rx}$ antennas in the $N_{rx}$ antennas, $L_{rx}$ is a positive integer, and $N_{rx}>L_{rx}$.

2. The method according to claim 1, wherein the method further comprises:
    communicating with the second device in the $(T+1)^{th}$ time unit to a $(T+x)^{th}$ time unit, wherein x is an integer greater than 0.

3. The method according to claim 1 or 2, wherein the method further comprises:
    receiving a first message from the second device, wherein the first message comprises T.

4. The method according to any one of claims 1 to 3, wherein the method further comprises:
    receiving a second message from the second device, wherein the second message comprises a degradation failure coefficient $\beta$.

5. The method according to any one of claims 1 to 4, wherein $N_{tx}$ is an integer greater than 1; and
    the method further comprises:
    receiving first indication information from the second device, wherein the first indication information indicates a first antenna, the $N_{tx}$ antennas comprise the first antenna, and the first antenna is used by the first device to perform communication with the second device.

6. The method according to claim 2, wherein the first device further comprises $L_{tx}$ radio frequency channels, $N_{tx}$ and $L_{tx}$ are positive integers, $N_{tx}>L_{tx}$, x is equal to T, and the communicating with the second device in the $(T+1)^{th}$ time unit to a $(T+x)^{th}$ time unit comprises:
    receiving a second channel sounding sequence from the second device in the $(T+1)^{th}$ time unit to a $2T^{th}$ time unit, wherein the second channel sounding sequence is used to determine T second antenna subsets, each second antenna subset in the T second antenna subsets and a weight coefficient of each second antenna subset are used to determine a second antenna subset corresponding to a $(2T+1)^{th}$ time unit in the first device, and the T second antenna subsets are second antenna subsets corresponding to the $(T+1)^{th}$ time unit to the $2T^{th}$ time unit.

7. The method according to claim 6, wherein the method further comprises:
    receiving second indication information from the second device, wherein the second indication information indicates the first device to use a second antenna subset corresponding to an $((N-1)*T+1)^{th}$ time unit to perform data communication with the second device, and N is an integer greater than 2.

8. The method according to claim 7, wherein the method further comprises:
    receiving third indication information from the second device, wherein the third indication information indicates the first device to send the first channel sounding sequence, and the first channel sounding sequence is used to update a first antenna subset used for data communication between the second device and the first device.

9. A communication method, wherein the method is applied to a second device comprising $N_{rx}$ antennas and $L_{rx}$ radio frequency channels, $N_{rx}$ and $L_{rx}$ are positive integers, $N_{rx}>L_{rx}$, and the method comprises:

obtaining T first antenna subsets corresponding to T time units before a $(T+1)^{th}$ time unit and T weight coefficients of the T first antenna subsets, wherein the T first antenna subsets corresponding to the T time units are determined based on a first channel sounding sequence, T is a positive integer, each first antenna subset comprises $L_{rx}$ antennas, the $L_{rx}$ antennas are $L_{rx}$ antennas in the $N_{rx}$ antennas, and the T first antenna subsets are used for communication with a first device in the T time units;

determining, based on the T first antenna subsets and the T weight coefficients, a first antenna subset corresponding to the $(T+1)^{th}$ time unit; and

communicating with the first device by using the first antenna subset corresponding to the $(T+1)^{th}$ time unit.

10. The method according to claim 9, wherein the communicating with the first device by using the first antenna subset corresponding to the $(T+1)^{th}$ time unit comprises:

communicating with the first device in the $(T+1)^{th}$ time unit to a $(T+x)^{th}$ time unit by using the first antenna subset corresponding to the $(T+1)^{th}$ time unit, wherein x is an integer greater than 0.

11. The method according to claim 9 or 10, wherein the obtaining T first antenna subsets corresponding to T time units comprises:

receiving, in a $t^{th}$ time unit in the T time units, the first channel sounding sequence from the first device by using s antenna subsets, wherein the first channel sounding sequence is used to determine a first channel matrix H(t), the first channel matrix H(t) is a matrix with $N_{rx}$ rows and $N_{tx}$ columns, $N_{tx}$ is a quantity of antennas comprised in the first device, $N_{tx}$ is an integer greater than 0, each antenna subset in the s antenna subsets comprises $L_{rx}$ antennas, at least one antenna differs between antennas comprised in different antenna subsets, t={1, 2, ..., T},

and $$s = \left\lceil \frac{N_{rx}}{L_{rx}} \right\rceil$$ ; and

determining, from the $N_{rx}$ antennas based on the first channel matrix H(t), a first antenna subset corresponding to the $t^{th}$ time unit.

12. The method according to any one of claims 9 to 11, wherein the method further comprises:
sending a first message to the first device, wherein the first message comprises T.

13. The method according to any one of claims 9 to 12, wherein the T time units correspond to T signal-to-interference ratios, and the method further comprises:

increasing a value of T when an average value of the T signal-to-interference ratios corresponding to the T time units is less than or equal to a first preset threshold; or

decreasing a value of T when an average value of the T signal-to-interference ratios corresponding to the T time units is greater than or equal to a second preset threshold, wherein the first preset threshold is less than the second preset threshold.

14. The method according to any one of claims 9 to 13, wherein a weight coefficient $a(t)$ of the first antenna subset corresponding to the $t^{th}$ time unit is determined based on an $i^{th}$ element w(i) in a first sequence and a signal-to-interference ratio $\gamma(t)$ corresponding to the $t^{th}$ time unit, the first sequence is monotonically non-decreasing, t={1, 2, ..., T}, and i={1, 2, ..., T}.

15. The method according to claim 14, wherein the method further comprises:

obtaining a first queue, wherein the first queue sequentially comprises the T signal-to-interference ratios corresponding to the T time units;

obtaining a signal-to-interference ratio corresponding to the $(T+1)^{th}$ time unit;

deleting a signal-to-interference ratio corresponding to a $1^{st}$ time unit at the head of the first queue, and storing the signal-to-interference ratio corresponding to the $(T+1)^{th}$ time unit into the end of the first queue, to obtain an updated first queue;

updating the weight coefficient $a(t)$ of the first antenna subset corresponding to the $t^{th}$ time unit, wherein the weight coefficient $a(t)$ of the first antenna subset corresponding to the $t^{th}$ time unit is determined based on the $i^{th}$ element w(i) in the first sequence and a signal-to-interference ratio $\gamma(t)$ corresponding to the $t^{th}$ time unit in the updated first queue, t={2, ..., T}, and i={1, 2, ..., T-1}; and

determining a weight coefficient $a(T+1)$ of the first antenna subset corresponding to the $(T+1)^{th}$ time unit, wherein the weight coefficient $a(T+1)$ of the first antenna subset corresponding to the $(T+1)^{th}$ time unit is determined based on a $T^{th}$ element of the updated first queue and a signal-to-interference ratio during the communication in the $(T+1)^{th}$ time unit.

**16.** The method according to claim 14 or 15, wherein w(i) satisfies:

$$w(i)=d,$$

wherein

$$d \in [0, 1].$$

**17.** The method according to claim 14 or 15, wherein the first sequence is determined based on a degradation failure coefficient $\beta$ and T, wherein $\beta \in [0, 1]$.

**18.** The method according to claim 17, wherein w(i) satisfies:

$$w(i)=c*(\beta)^{T-i}+e,$$

wherein $i=\{1, 2, ..., T\}$, c is a normal number, and e is a constant.

**19.** The method according to claim 17 or 18, wherein the T time units correspond to the T signal-to-interference ratios, and the method further comprises:

increasing a value of $\beta$ when a variance of the signal-to-interference ratios corresponding to the T time units is less than or equal to a third preset threshold; or

decreasing a value of $\beta$ when a variance of the signal-to-interference ratios corresponding to the T time units is greater than or equal to a fourth preset threshold, wherein the third preset threshold is less than the fourth preset threshold.

**20.** The method according to any one of claims 17 to 19, wherein the method further comprises:
sending a second message to the first device, wherein the second message comprises $\beta$, and $\beta$ is used to determine a weight coefficient of a second antenna subset corresponding to each time unit in the $(T+1)^{th}$ time unit to a $2T^{th}$ time unit for the first device.

**21.** The method according to any one of claims 9 to 20, wherein the first antenna subset corresponding to the $(T+1)^{th}$ time unit comprises $L_{rx}$ antennas with largest weight coefficients in a target antenna set, the target antenna set is a union of the T first antenna subsets, a weight coefficient of an antenna z in the target antenna set is a sum of weight coefficients of first antenna subsets to which the antenna z belongs, and the antenna z is any antenna in the target antenna set.

**22.** The method according to any one of claims 9 to 21, wherein the first device comprises $N_{tx}$ antennas, and $N_{tx}$ is an integer greater than 1; and
the method further comprises:
sending first indication information to the first device, wherein the first indication information indicates a first antenna, the $N_{tx}$ antennas comprise the first antenna, and the first antenna is used by the first device to perform communication with the second device.

**23.** The method according to claim 22, wherein the method further comprises:
determining the first antenna from the $N_{tx}$ antennas based on the first antenna subset corresponding to the $(T+1)^{th}$ time unit and the first channel matrix H(t) corresponding to the $t^{th}$ time unit, wherein t is an integer, and $t \in [1, T]$.

**24.** The method according to any one of claims 9 to 23, wherein the first device comprises the $N_{tx}$ antennas and $L_{tx}$ radio frequency channels, $N_{tx}$ and $L_{tx}$ are positive integers, and $N_{tx}>L_{tx}$; and
the communicating with the first device by using the first antenna subset corresponding to the $(T+1)^{th}$ time unit comprises:

sending, in the $(T+1)^{th}$ time unit to the $2T^{th}$ time unit, a second channel sounding sequence to the first device by using the first antenna subset corresponding to the $(T+1)^{th}$ time unit, wherein the second channel sounding sequence is used to determine T second antenna subsets, each second antenna subset in the T second antenna subsets and a weight coefficient of each second antenna subset are used to determine a second antenna subset corresponding to a $(2T+1)^{th}$ time unit in the first device, and the T second antenna subsets are second antenna subsets corresponding to the $(T+1)^{th}$ time unit to the $2T^{th}$ time unit.

25. The method according to claim 24, wherein the method further comprises:

    determining a change amount between a first antenna subset corresponding to an $(N*T+1)^{th}$ time unit and a first antenna subset corresponding to an $((N-2)*T+1)^{th}$ time unit, wherein N is an integer greater than 2;
    sending second indication information to the first device when the change amount is less than a first preset threshold, wherein the second indication information indicates the first device to use a second antenna subset corresponding to an $((N-1)*T+1)^{th}$ time unit to perform data communication with the second device; and
    performing data communication with the first device by using the first antenna subset corresponding to the $(N*T+1)^{th}$ time unit.

26. The method according to claim 25, wherein after the performing data communication with the first device by using the first antenna subset corresponding to the $(N*T+1)^{th}$ time unit, the method further comprises:
    sending third indication information to the first device if communication quality of the data communication does not meet preset communication quality, wherein the third indication information indicates the second device to send the first channel sounding sequence, and the first channel sounding sequence is used to update a first antenna subset used for data communication between the second device and the first device.

27. A communication apparatus, comprising a unit or a module configured to perform the method according to any one of claims 1 to 8, or comprising a unit or a module configured to perform the method according to any one of claims 9 to 26.

28. A communication apparatus, comprising:

    one or more processors, one or more transceivers, and one or more memories, wherein
    the one or more memories are configured to store a computer program, and the one or more processors and the one or more transceivers are configured to execute the computer program stored in the one or more memories, so that the communication apparatus performs the method according to any one of claims 1 to 8, or performs the method according to any one of claims 9 to 26.

29. A computer-readable storage medium, wherein the storage medium stores a computer program or instructions, and when the computer program or the instructions are executed by a computer, the method according to any one of claims 9 to 26 is implemented, or the method according to any one of claims 1 to 8 is performed.

30. A computer program product, comprising computer program code, wherein when the computer program code is run on a computer, the method according to any one of claims 1 to 8 is implemented, or the method according to any one of claims 9 to 26 is performed.

31. A communication system, comprising a first device and a second device, wherein the first device is configured to perform the method according to any one of claims 1 to 8, and the second device is configured to perform the method according to any one of claims 9 to 26.

Layer 1    Layer 2    Layer 3  ···  Layer N

Multi-layer stacked
antenna array

Multi-layer
antennas of one
cell sector

Antenna tower

Terminal device 1

Terminal device 2

Terminal device 3

FIG. 1

EP 4 557 630 A1

FIG. 2

FIG. 3

A second device obtains T first antenna subsets corresponding to T time units before a (T+1)$^{th}$ time unit and T weight coefficients of the T first antenna subsets ⟶ S401

The second device determines, based on the T first antenna subsets and the T weight coefficients, a first antenna subset corresponding to the (T+1)$^{th}$ time unit ⟶ S402

Perform communication with a first device by using the first antenna subset corresponding to the (T+1)$^{th}$ time unit ⟶ S403

FIG. 4

| $\gamma(1)$ | $\gamma(2)$ | ... | $\gamma(t)$ | ... | $\gamma(T)$ |
|---|---|---|---|---|---|
| 1 | 2 | ... | t | ... | T |

Time

FIG. 5

| $\gamma(2)$ | $\gamma(3)$ | ... | $\gamma(t)$ | ... | $\gamma(T+1)$ |
|---|---|---|---|---|---|
| 2 | 3 | ... | t | ... | T+1 |

Time

FIG. 6

A second device obtains T first antenna subsets corresponding to T time units before a (T+1)$^{th}$ time unit and T weight coefficients of the T first antenna subsets — S701

The second device determines, based on the T first antenna subsets and the T weight coefficients, a first antenna subset corresponding to the (T+1)$^{th}$ time unit — S702

The second device sends first indication information to a first device — S703

The second device performs communication with the first device by using the first antenna subset corresponding to the (T+1)$^{th}$ time unit — S704

FIG. 7

A second device obtains T first antenna subsets corresponding to T time units before a $(T+1)^{th}$ time unit and T weight coefficients of the T first antenna subsets — S801

The second device determines, based on the T first antenna subsets and the T weight coefficients, a first antenna subset corresponding to the $(T+1)^{th}$ time unit — S802

The second device sends, in the $(T+1)^{th}$ time unit to a $2T^{th}$ time unit, a second channel sounding sequence to a first device by using the first antenna subset corresponding to the $(T+1)^{th}$ time unit — S803

The second device performs data communication with the first device by using the first antenna subset corresponding to the $(T+1)^{th}$ time unit — S804

FIG. 8

A second device obtains T first antenna subsets corresponding to T time units before a $(T+1)^{th}$ time unit and T weight coefficients of the T first antenna subsets ⟋ S901

The second device determines, based on the T first antenna subsets and the T weight coefficients, a first antenna subset corresponding to the $(T+1)^{th}$ time unit ⟋ S902

The second device sends, in the $(T+1)^{th}$ time unit to a $2T^{th}$ time unit, a second channel sounding sequence to a first device by using the first antenna subset corresponding to the $(T+1)^{th}$ time unit ⟋ S903

The second device determines a change amount between a first antenna subset corresponding to an $(N*T+1)^{th}$ time unit and a first antenna subset corresponding to an $((N-2)*T+1)^{th}$ time unit ⟋ S904

The second device sends second indication information to the first device when the change amount is less than a first preset gate ⟋ S905

The second device performs data communication with the first device by using the first antenna subset corresponding to the $(N*T+1)^{th}$ time unit ⟋ S906

The second device sends third indication information to the first device if communication quality of the data communication does not meet preset communication quality ⟋ S907

FIG. 9

1001

Transceiver unit

1002

Processing unit

Communication apparatus

FIG. 10

1101

Transceiver unit

1102

Processing unit

Communication apparatus

FIG. 11

## INTERNATIONAL SEARCH REPORT

| | International application No. |
|---|---|
| | **PCT/CN2022/117086** |

**A.    CLASSIFICATION OF SUBJECT MATTER**

H04B 7/08(2006.01)i

According to International Patent Classification (IPC) or to both national classification and IPC

**B.    FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; CNKI; VEN; DWPI; EPTXT; USTXT; WOTXT; IEEE: 天线, 选择, 选用, 选取, 配置, 控制, 确定, 探测, 测量, 信道矩阵, 信道响应, 时间, 先验, 权值, 历史, 权重, 加权, antenna, choose, select, channel, matrix, transcendent, response, history, sounding, time, weight, determine

**C.    DOCUMENTS CONSIDERED TO BE RELEVANT**

| Category* | Citation of document, with indication, where appropriate, of the relevant passages | Relevant to claim No. |
|---|---|---|
| X | CN 101258730 A (MITSUBISHI ELECTRIC RESEARCH LABORATORIES) 03 September 2008 (2008-09-03) description, p. 5, line 9 to p. 15, line 24, and figures 1-11 | 1-31 |
| X | CN 101405957 A (MITSUBISHI ELECTRIC CORP.) 08 April 2009 (2009-04-08) description, p. 2, line 14 to p. 12, line 2, and figures 1-4 | 1-31 |
| A | CN 112054825 A (HUAWEI TECHNOLOGIES CO., LTD.) 08 December 2020 (2020-12-08) entire document | 1-31 |
| A | CN 110800219 A (HUAWEI TECHNOLOGIES CO., LTD.) 14 February 2020 (2020-02-14) entire document | 1-31 |
| A | CN 1502180 A (MOTOROLA INC.) 02 June 2004 (2004-06-02) entire document | 1-31 |
| A | US 2011249760 A1 (QUALCOMM INC.) 13 October 2011 (2011-10-13) entire document | 1-31 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2022** | **31 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 557 630 A1

| INTERNATIONAL SEARCH REPORT | | | | International application No. | | |
| Information on patent family members | | | | PCT/CN2022/117086 | | |

| Patent document cited in search report | | | Publication date (day/month/year) | Patent family member(s) | | | Publication date (day/month/year) |
|---|---|---|---|---|---|---|---|
| CN | 101258730 | A | 03 September 2008 | CN | 101273545 | A | 24 September 2008 |
| | | | | EP | 1929644 | A2 | 11 June 2008 |
| | | | | EP | 1929752 | A2 | 11 June 2008 |
| | | | | WO | 2007040515 | A2 | 12 April 2007 |
| | | | | JP | 2009519617 | A | 14 May 2009 |
| | | | | WO | 2007040554 | A2 | 12 April 2007 |
| | | | | JP | 2009510898 | A | 12 March 2009 |
| | | | | US | 2008247370 | A1 | 09 October 2008 |
| | | | | JP | 2009519618 | A | 14 May 2009 |
| | | | | CN | 101273543 | A | 24 September 2008 |
| | | | | EP | 2320576 | A2 | 11 May 2011 |
| | | | | WO | 2007040515 | A3 | 05 July 2007 |
| | | | | EP | 1929752 | A4 | 14 April 2010 |
| | | | | EP | 2320576 | A3 | 14 December 2011 |
| | | | | JP | 2011254550 | A | 15 December 2011 |
| | | | | US | 8514815 | B2 | 20 August 2013 |
| | | | | EP | 1929644 | A4 | 16 March 2011 |
| | | | | WO | 2007040554 | A3 | 19 July 2007 |
| CN | 101405957 | A | 08 April 2009 | JP | 2009530873 | A | 27 August 2009 |
| | | | | EP | 1997240 | A1 | 03 December 2008 |
| | | | | WO | 2007108283 | A1 | 27 September 2007 |
| | | | | US | 2007224943 | A1 | 27 September 2007 |
| | | | | US | 7917107 | B2 | 29 March 2011 |
| | | | | JP | 5037351 | B2 | 26 September 2012 |
| | | | | CN | 101405957 | B | 26 December 2012 |
| | | | | EP | 1997240 | B1 | 16 January 2013 |
| CN | 112054825 | A | 08 December 2020 | WO | 2020244368 | A1 | 10 December 2020 |
| | | | | EP | 3968533 | A1 | 16 March 2022 |
| | | | | US | 2022094412 | A1 | 24 March 2022 |
| | | | | CN | 112054825 | B | 10 May 2022 |
| | | | | EP | 3968533 | A4 | 06 July 2022 |
| CN | 110800219 | A | 14 February 2020 | US | 2019288760 | A1 | 19 September 2019 |
| | | | | WO | 2019006730 | A1 | 10 January 2019 |
| | | | | EP | 3531572 | A1 | 28 August 2019 |
| | | | | EP | 3531572 | A4 | 22 January 2020 |
| | | | | US | 11070263 | B2 | 20 July 2021 |
| | | | | CN | 110800219 | B | 30 November 2021 |
| | | | | CN | 114221683 | A | 22 March 2022 |
| CN | 1502180 | A | 02 June 2004 | KR | 20030085101 | A | 01 November 2003 |
| | | | | EP | 1384335 | A2 | 28 January 2004 |
| | | | | ES | 2539241 | T3 | 29 June 2015 |
| | | | | US | 2003185309 | A1 | 02 October 2003 |
| | | | | WO | 02082689 | A2 | 17 October 2002 |
| | | | | JP | 2005509316 | A | 07 April 2005 |
| | | | | AU | 2002256079 | A1 | 21 October 2002 |
| | | | | WO | 02082689 | A3 | 30 October 2003 |
| | | | | US | 6859503 | B2 | 22 February 2005 |
| | | | | KR | 594530 | B1 | 30 June 2006 |
| | | | | CN | 1281004 | C | 18 October 2006 |
| | | | | JP | 4194368 | B2 | 10 December 2008 |

Form PCT/ISA/210 (patent family annex) (January 2015)

**INTERNATIONAL SEARCH REPORT**
Information on patent family members

International application No.

**PCT/CN2022/117086**

| Patent document cited in search report | | Publication date (day/month/year) | Patent family member(s) | | | Publication date (day/month/year) |
|---|---|---|---|---|---|---|
| | | | EP | 1384335 | B1 | 03 June 2015 |
| US | 2011249760 A1 | 13 October 2011 | WO | 2011084716 | A1 | 14 July 2011 |
| | | | TW | 201141110 | A | 16 November 2011 |

Form PCT/ISA/210 (patent family annex) (January 2015)